# EUROPÄISCHE PATENTANMELDUNG

(11) **EP 4 458 718 A2**
(43) Veröffentlichungstag der Anmeldung: **06.11.2024**
(21) Anmeldenummer: 24192760.7
(22) Anmeldetag: 16.12.2019
(51) Int. Cl.: B65D 47/28

(54) **DOSENDECKEL, DOSE UND VERFAHREN ZUM HERSTELLEN EINES DOSENDECKELS**

(30) Priorität: 17.12.2018 EP 18212937
(62) Teilanmeldung aus: 19818097.8
(71) Anmelder: RE-LID Engineering AG, 9491 Ruggell (LI)
(72) Erfinder: BÜHLER, Alois, 9495 Triesen (LI); SCHANDL, Christian, 2700 Wiener Neustadt (DE)
(74) Vertreter: Vossius & Partner Patentanwälte Rechtsanwälte mbB

(57) **Zusammenfassung**

Die Erfindung betrifft Dosendeckel für eine Dose, mit wenigstens einem Deckelspiegel, welcher dazu ausgebildet ist, eine Oberseite der Dose zu begrenzen, wobei der Deckelspiegel wenigstens eine Ausgussöffnung aufweist, durch welche ein in der Dose befindlicher Stoff ausgeschüttet werden kann, einem Betätigungselement, welches an einer Oberseite des Deckelspiegels, welche einem Innenraum der Dose bei daran angebrachtem Dosendeckel abgewandt ist, angeordnet ist, und einem Verschlusselement, welches an einer Unterseite des Deckelspiegels, welche einem Innenraum der Dose bei daran angebrachtem Dosendeckel zugewandt ist, angeordnet ist, wobei das Verschlusselement zwischen einer Schließstellung, in welcher das Verschlusselement die Ausgussöffnung fluiddicht und/oder gasdicht verschließt, und einer Offenstellung, in welcher die Ausgussöffnung wenigstens teilweise freigegeben ist, im Wesentlichen translatorisch entlang des Deckelspiegels geführt mittels des Betätigungselements verschiebbar ist, wobei das Verschlusselement und das Betätigungselement mittels einer Verbindung aneinander befestigt sind, wobei in der Offenstellung zwischen dem Verschlusselement und dem Deckelspiegel ein Luftkanal gebildet ist, wobei ein erstes Ende des Luftkanals in der Offenstellung durch eine Lücke zwischen dem Verschlusselement und dem Betätigungselement gebildet ist, wobei die Lücke durch ein Auslenken des Verschlusselements an einem dem Verschlusselement zugewandten Vorsprung des Deckelspiegels in der Offenstellung gebildet wird.

## Beschreibung

Die vorliegende Erfindung betrifft einen Dosendeckel. Zudem betrifft die Erfindung eine Dose und ein Verfahren zum Herstellen eines Dosendeckels.

Bekannt sind Getränkedosen mit einem zylindrischen Behälter aus Aluminium oder Weißblech. Darauf ist ein Deckel aufgefalzt, an welchem eine Metalllasche als Öffner angenietet ist. Beim Anheben der Metalllasche wird eine angeritzte ovale Linie aufgebrochen und ein Teil des Deckels ins Doseninnere zum Freigeben einer Trinköffnung gedrückt. Nachteilig ist dabei, dass die Getränkedose nicht wieder verschlossen werden kann. Dadurch wird ein darin befindliches Getränk schnell schal. Zudem kann bei einem weiteren Transport leicht das Getränk verschüttet werden.

Es sind auch wiederverschließbare Dosendeckel bekannt. Beispielsweise wird in der EP 2 614 010 B1 ein Dosendeckel beschrieben, bei welchem ein unterseitiges Verschlusselement durch ein oberseitiges Betätigungselement zwischen einer Schließstellung und einer Offenstellung geschwenkt werden kann. Das Verschlusselement und das Betätigungselement sind jedoch große Bauteile, was bei der Abfüllung nachteilig ist. Zudem ist der Dosendeckel so schwer und teuer. Üblicherweise sind das Betätigungselement und das Verschlusselement zudem aus Kunststoff ausgebildet, womit ein Recycling erschwert wird. Die rotatorische Bewegung erfordert zudem hohe Betätigungskräfte und belastet die Bauteile ungünstig, beispielsweise mit einer starken Scherkraft.

Aufgabe der vorliegenden Erfindung ist es, einen Dosendeckel, welcher wiederverschließbar ist, zu verbessern. Weiterhin ist es Aufgabe der Erfindung, ein Verfahren zum Herstellen eines wiederverschließbaren Dosendeckels und eine wiederverschließbare Dose zu verbessern.

Diese Aufgaben werden durch die Gegenstände der unabhängigen Patentansprüche gelöst. Vorteilhafte Ausgestaltungen mit zweckmäßigen Weiterbildungen der Erfindung sind in den jeweiligen Unteransprüchen angegeben.

Ein erster Aspekt betrifft einen Dosendeckel für eine Dose. Die Dose kann vorzugsweise als Getränkedose und/oder als Aufbewahrungsbehälter für Schüttgut ausgebildet sein. Der Dosendeckel kann wenigstens einen Deckelspiegel aufweisen, welcher dazu ausgebildet ist, eine Oberseite der Dose zu begrenzen, vorzugsweise durch Bördeln eines äußeren umlaufenden Rands des Deckelspiegels mit einer seitlichen Wand der Dose. Bezüglich Material und Aufbau kann der Deckelspiegel beispielsweise einem Deckel von herkömmlichen Getränkedosen entsprechen. Beispielsweise kann der Deckelspiegel aus Aluminium oder Weißbleich gebildet sein, optional mit einer Kunststoffbeschichtung, beispielsweise als Korrosionsschutz. Der Deckelspiegel kann wenigstens eine Ausgussöffnung aufweisen, durch welche ein in der Dose befindlicher Stoff ausgeschüttet werden kann. Die Ausgussöffnung ist vorzugsweise immer im Deckelspiegel vorgesehen. Die Ausgussöffnung wird also nicht, wie bei Getränkedosen sonst üblich, erst durch eine Metalllasche beim erstmaligen Öffnen aufgebrochen.

Der Dosendeckel kann ein Betätigungselement aufweisen, welches an einer Oberseite des Deckelspiegels, welche einem Innenraum der Dose bei daran angebrachtem Dosendeckel abgewandt ist, angeordnet ist. Zudem kann der Dosendeckel ein Verschlusselement aufweisen, welches an einer Unterseite des Deckelspiegels, welche einem Innenraum der Dose bei daran angebrachtem Dosendeckel zugewandt ist, angeordnet ist. Das Verschlusselement kann zwischen einer Schließstellung, in welcher das Verschlusselement die Ausgussöffnung fluiddicht und/oder gasdicht verschließt, und einer Offenstellung, in welcher die Ausgussöffnung wenigstens teilweise freigegeben ist, im Wesentlichen translatorisch entlang des Deckelspiegels geführt mittels des Betätigungselements verschiebbar sein. Die translatorische Bewegung ist sehr intuitiv, belastet eine Verbindung zwischen Verschlusselement und Betätigungselement wenig und erfordert geringe Betätigungskräfte.

Vorzugsweise sind das Verschlusselement und/oder das Betätigungselement aus einem metallischen Werkstoff gebildet, vorzugsweise aus einem Aluminiumwerkstoff oder Weißblech. Dies erleichtert ein Recycling. Vorzugsweise ist das Verschlusselement und/oder das Betätigungselement aus den gleichen Werkstoffen wie der Deckelspiegel und/oder ein Körper der Dose gebildet, womit vorzugsweise die gesamte Dose ohne Zerlegung recycelt werden kann. Beispielsweise kann das Verschlusselement und/oder das Betätigungselement aus einem Weißblech oder Aluminiumblech gebildet sein und optional eine Kunststoffschicht zum Korrosionsschutz aufweisen. Vorzugsweise ist die Kunststoffschicht bei dem Deckelspiegel, dem Verschlusselement, dem Betätigungselement und/oder dem Dosenkörper sowohl innenseitig als auch außenseitig vorgesehen.

Das Verschlusselement ist an seiner Ober- und/oder Unterseite vorzugsweise nicht eben. Insbesondere kann das Verschlusselement an seiner Oberseiteseite eine oder mehrere Aussparungen oder einen oder mehrere vorstehende Bereiche aufweisen. Eine solche Aussparung kann beispielsweise im Bereich eines Nietnippels ausgebildet sein bzw. zu ein mit diesem Nietnippel korrespondierenden, vertieften Bereich der Unterseite. Ein vorstehender Bereich kann z.B. an der Unterseite korrespondierend zu einem an der Oberseite des Verschlusselements verlaufenden Luftkanal ausgebildet sein.

Das Verschlusselement und das Betätigungselement sind mittels einer Verbindung aneinander befestigt. Die Verbindung ist vorzugsweise fest und/oder in ihrer Länge nicht variabel. In anderen Worten ist der Abstand zwischen Betätigungselement und Verschlusselement im Bereich der Verbindung vorzugsweise fest und/oder nicht variabel. Dies ermöglicht u.a. eine automatische Anpassung des Anpressdrucks des Verschlusselements an den Deckel, worauf unten näher eingegangen wird.

Vorzugsweise sind das Verschlusselement und das Betätigungselement mittels einer das Verschlusselement nicht durchdringenden Verbindung miteinander befestigt. So wird der Inhalt der Dose zuverlässig geschützt. Insbesondere können so unerwünschte Leckagen bei geschlossenem Deckel ausgeschlossen werden. Eine solche Verbindung ist vorteilhaft bei dem Einsatz von metallischen Werkstoffen bei dem Verschlusselement und/oder Betätigungselement, da eine Durchgangsöffnung zur Verbindung nur mit großem Aufwand abgedichtet werden kann und unter Druck zu Leckagen neigt. Besonders geeignet ist eine Nietverbindung. Eine Nietverbindung kann großen Kräften, beispielsweise bei einer missbräuchlichen Betätigung, besonders gut widerstehen. Zudem ermöglichen Niettechniken hohe Produktionsraten mit geringem Ausschuss. Besonders geeignet ist auch eine Schweißverbindung, da ein geringer Materialeinsatz notwendig ist. Beispielsweise können das Betätigungselement und das Verschlusselement mit Ultraschall oder Reibschweißen miteinander befestigt werden, insbesondere bei Verwendung von Kunststoffen zur Herstellung des Verschlusselements und/oder des Betätigungselements.

Bei Verschiebung des Verschlusselements aus der Schließstellung in die Offenstellung kann die Verbindung entlang eines Führungsschlitzes in dem Deckelspiegel bewegt werden. Die Verbindung, insbesondere ein Niet, Nietbereich und/oder Schweißbereich, kann also in einer durch den Deckelspiegel definierten Ebene angeordnet sein. Insbesondere kann die Verbindung den Deckelspiegel durchdringen, also in einer Durchgangsöffnung des Deckelspiegels angeordnet sein. Die Verbindung kann so als Führung dienen. Zudem kann eine Bauhöhe des Dosendeckels so besonders flach sein, wodurch sich Vorteile bei der Abfüllung ergeben. Beispielsweise bestimmt die Bauhöhe, wie viele Dosendeckel in einem Magazin vorgesehen werden können. Dünne wiederschließbare Dosendeckel erlauben ähnliche Magazinfüllungen wie nicht wiederverschließbare Dosendeckel, womit eine Produktionsrate gegenüber nicht wiederschließbaren Dosen auf der gleichen Abfüllanlage gleich oder nur geringfügig geringer ist.

Der Deckelspiegel hat vorzugsweise einen Außendurchmesser von mindestens 4,5 cm, mindestens 5 cm oder mindestens 5,5 cm. Der Deckelspiegel kann in seinen äußeren Abmessungen, abgesehen von Durchgangsöffnungen, einem standardisierten Deckelspiegel von Getränkedosen entsprechen, insbesondere einem B64 oder CDL Deckelspiegel. Der B64 Deckelspiegel kann z.B. vom Typ 200, 202, 204, 206 oder 209 sein. Der CDL Deckelspiegel kann z.B. vom Typ 200 oder 202 sein. Der Deckelspiegel kann im Wesentlichen flach und/oder rund ausgebildet sein, vorzugsweise kreisförmig. Der Deckelspiegel kann eine umlaufende Sicke aufweisen, welche dessen Stabilität erhöht und beim Bilden des Falzrands hilft. Der Deckelspiegel kann auch als Shell bezeichnet werden.

Alle metallischen Teile des Dosendeckels sind vorzugsweise auf der einem Aufbewahrungsraum der Dose zugwandten Flachseite, vorzugsweise auch der abgewandten Flachseite, mit Kunststoff beschichtet oder einer Kunststofffolie bezogen. Dies dient dem Korrosionsschutz und dem Schutz des in der Dose aufbewahrten Stoffs. Beispielsweise kann so ein Auflösen von Metall durch eine in der Dose befindliche Flüssigkeit verhindert werden. Es kann so beispielsweise auch verhindert werden, das Metallpartikel in ein Getränk gelangen. Abgesehen von dieser Beschichtung oder Folie kann der Deckelspiegel, das Betätigungselement und/oder das Verschlusselement aus dem metallischen Werkstoff, insbesondere nur einem und/oder dem gleichen metallischen Werkstoff bestehen. Das Verschlusselement kann im Wesentlichen flach und/oder rund ausgebildet sein

Die Dose, für welche der Dosendeckel vorgesehen ist, ist vorzugsweise zur Aufbewahrung eines Getränks, einer Suppe oder eines Schüttguts vorgesehen. Das Getränk kann z.B. Fasern, wie Fruchtfleisch bei einem Orangensaft, enthalten. Das Schüttgut kann beispielsweise ein Gewürz sein. Suppe kann z.B. Stückgut wie Nudeln, Fleischstücke, etc. aufweisen. Vorzugsweise ist die Ausgussöffnung groß genug, um diese mit ausschütten zu können. Zu diesem Zweck kann das Verschlusselement eine Ausgussöffnung in der Offenstellung freigeben, welche größer als feste Körper in der Dose ist. Die Ausgussöffnung kann eine Durchgangsöffnung von einem Innenraum nach außerhalb der Dose sein. Eine Querschnittfläche der Ausgussöffnung ist vorzugsweise mindestens 1,5 cm², noch bevorzugter mindestens 1,8 cm² und ganz bevorzugt mindestens 2 cm².

Die Ausgussöffnung hat vorzugsweise eine ovale, kreisförmige oder halbmondförmige Form. Ein in Längsrichtung des Führungsschlitzes vorderer und ein in Längsrichtung des Führungsschlitzes hinterer Randbereich der Ausgussöffnung ist vorzugsweise bogenförmig und/oder gekrümmt. Dabei ist vorzugsweise sowohl ein vorderer Randbereich wie auch ein hinterer Randbereich in die gleiche Richtung gekrümmt. Hierdurch bildet der Deckelspiegel am Randbereich der Ausgussöffnung, an dem der Führungsschlitz angeordnet ist, vorzugsweise zwei in die Ausgussöffnung hineinragende Zungen. Durch diese Zungen kann die Verbindung in einer vordersten Position des Verschlusselements geführt sein.

Der Führungsschlitz kann eine Durchgangsöffnung in dem Deckelspiegel sein. Vorzugsweise ist der Führungsschlitz als längliche Öffnung ausgebildet. Eine Breite des Führungsschlitzes kann im Wesentlichen konstant über dessen Länge ausgebildet sein. Der Führungsschlitz kann die translatorische Bewegung von Verschlusselement und Betätigungselement zwischen der Schließstellung und der Offenstellung vorgeben. Wenigstens ein Teilbereich des Verschlusselements und/oder des Betätigungselements kann durch den Führungsschlitz geführt sein, beispielsweise indem dieser Teilbereich an einer den Führungsschlitz begrenzenden Kante des Deckelspiegels anliegt. Jeweilige seitliche Wände des Führungsschlitzes, welche vorzugsweise einen radial inneren Rand des Deckelspiegels bilden und/oder eine Kante des Deckelspiegels sind, können also eine Führung bilden.

Die Ausgussöffnung und/oder der Führungsschlitz sind vorzugsweise ausgestanzt. Es kann sich um ausgestanzte Durchgangsbereiche in dem Deckelspiegel handeln. Das Verschlusselement kann den Innenraum gegenüber der Ausgussöffnung in Schließstellung abdichten, beispielsweise mittels einer Dichtung und/oder durch Anpressen an den Deckelspiegel. Dieses Anpressen kann durch eine Vorspannung und/oder die Verbindung mit dem Betätigungselement bewirkt werden. Das Betätigungselement kann sich gemeinsam mit dem Verschlusselement bewegen, also ebenfalls vorzugsweise im Wesentlichen translatorisch entlang dem Deckelspiegel geführt. Durch deren Verbindung, beispielsweise durch die Nietverbindung, sind Betätigungselement und Verschlusselement bei normaler Benutzung dauerhaft miteinander verbunden. Bei einem bestimmungsgemäßen Gebrauch, wie einem Öffnen und Schließen der Dose, ist es vorzugsweise nicht vorgesehen, dass das Betätigungselement und das Verschlusselement voneinander getrennt werden. Die Verbindung kann dazu ausgebildet sein, das Betätigungselement und das Verschlusselement an dem Deckelspiegel zu halten. Vorzugsweise steht die Verbindung, insbesondere die Nietverbindung, unter einer Vorspannung. Das Betätigungselement kann durch die Vorspannung bombiert sein. Die Bombierung ist vorzugsweise in eine Richtung ausgebildet, welche durch einen erhöhten Innendruck und/oder ein Drücken auf das Betätigungselement verringert wird. Dies erleichtert das Öffnen.

In der Schließstellung deckt das Verschlusselement vorzugsweise die Ausgussöffnung und den Führungsschlitz gas- und/oder fluiddicht ab. Das Verschlusselement erstreckt sich bevorzugt weiter über den Deckelspiegel als Ausgussöffnung und Führungsschlitz zusammen. Das Verschlusselement ist vorzugsweise rotationssymmetrisch ausgebildet, was eine einfachere Verarbeitung bei Herstellung des Verschlusses ermöglicht. Jeweilige Außenkanten des Verschlusselements sind in der Schließstellung bevorzugt radial außerhalb jeweiliger Durchgangsöffnungen in dem Deckelspiegel angeordnet. Ein Durchmesser und/oder eine Länge des Verschlusselements, insbesondere ein Durchmesser und/oder eine Breite eines durch eine Dichtung des Verschlusselements umgebenen Bereichs, ist vorzugsweise größer als eine Länge zwischen einem vorderen Punkt der Ausgussöffnung, insbesondere einem Scheitelpunkt der Ausgussöffnung, und einem gegenüberliegenden hinteren Ende des Führungsschlitzes.

Das Betätigungselement erstreckt sich bevorzugt weiter über den Deckelspiegel als Ausgussöffnung und Führungsschlitz zusammen, insbesondere in der Schließstellung.

Bevorzugt bedeckt das Betätigungselement in der Schließstellung die Ausgussöffnung und den Führungsschlitz. Dadurch kann eine Ansammlung von Verschmutzung auf dem Verschlusselement, in dem Führungsschlitz und/oder in der Ausgussöffnung verhindert werden. Wird der Dosendeckel entlang einer Achse senkrecht zum Deckelspiegel, bei aufrechtstehender Getränkedose also in Vertikalrichtung, betrachtet, ist das Verschlusselement vorzugsweise so ausgebildet, dass es die Ausgussöffnung und/oder den Führungsschlitz in der Schließstellung vollständig überlappt. In der Offenstellung gibt das Verschlusselement mindestens 50%, vorzugsweise mindestens 70% und stärker bevorzugt mindestens 90%, der Fläche der Ausgangsöffnung frei. Durch die freigegebene Fläche ist der Doseninhalt daher unmittelbar zugänglich, etwa über einen Strohhalm. D.h., ein gerader Strohhalm kann in dem gesamten nicht überlappten Bereich entlang der Sichtachse (Vertikalrichtung der Dose) ohne Biegen oder Knicken durch die Ausgangsöffnung geführt werden. Dies entspricht der dem Konsumenten bei üblichen Getränkedosen bekannten Weise. Zudem kann dies das Ausschütten von Flüssigkeiten mit Fasern oder Stückgut erleichtern.

Die Oberseite des Dosendeckels und/oder jeweilige Teile kann auch als Außenseite bezeichnet werden. Ebenso kann die Unterseite auch als Innenseite bezeichnet werden. Vorzugsweise ist nur eine einzige Verbindung, beispielsweise die Nietverbindung oder ein einziger Schweißpunkt, zwischen Betätigungselement und Verschlusselement vorgesehen. Dadurch ist die Herstellung des Dosendeckels besonders schnell und kostengünstig.

Vorzugsweise ist die Verbindung durch einen in dem Verschlusselement oder dem Betätigungselement geformten Nippel gebildet, welcher mit dem korrespondierenden anderen Element verbunden ist. Beispielsweise kann der Nippel vernietet oder verschweißt werden. Ein als Nietnippel ausgebildeter Nippel kann in einer korrespondierenden Nietöffnung des anderen der beiden Elemente angeordnet sein. Vorzugsweise ist der Nippel geprägt. Beispielsweise kann das metallische Blech, aus dem das Element mit dem Nippel gebildet ist, zum Bilden des Nippels geprägt werden. Der Nippel ist vorzugsweise einteilig in dem Element gebildet. Der Nippel kann als ein vorstehender Bereich ausgebildet sein. Durch den Nietnippel kann auf ein separates Bauteil als Niet verzichtet werden und auch auf ein Durchstoßen des Verschlusselements zum Bilden der Verbindung. Durch den Nippel kann im Falle einer Verschweißung zudem ein definierter Schweißbereich vorgegebenen werden. Eine ähnliche Nietverbindung hält die Metalllasche, die als eingebauter Dosenöffner an herkömmlichen Getränkedosen an dem Deckelspiegel angenietet ist. Zum Nieten können deshalb bevorzugt auch die Anlagen für herkömmliche Dosen genutzt werden, womit ein Umrüsten zur Herstellung des wiederverschließbaren Dosendeckels besonders kostengünstig möglich ist. Bevorzugt ist der Nietnippel in dem Verschlusselement geformt und steht zur Oberseite hin ab. Die Nietöffnung kann eine Durchgangsöffnung sein und ist bevorzugt in dem Betätigungselement gebildet. Die Verbindung kann daher so gestaltet sein, dass sie das Verschlusselement nicht durchdringt.

Vorzugsweise erstreckt sich die Nietöffnung durch einen Vorsprung, insbesondere durch einen in Richtung der Unterseite des Deckelspiegels vorspringenden Vorsprung des Betätigungselements. Durch den Vorsprung kann die Gesamtdicke des Dosendeckels gering sein. Zu diesem Zweck kann sich der Vorsprung vorzugsweise in den Führungsschlitz hinein erstrecken. Der Vorsprung kann vorzugsweise durch Prägen hergestellt werden. Insofern kann der Vorsprung durch eine Vertiefung im Betätigungselement gegenüber einem umgebenden flachen Bereich gebildet sein. Bevorzugt ist der sich daran anschließende Bereich der Befestigungsabschnitt des Betätigungselements, welcher später noch beschrieben wird. Die Nietöffnung ist bevorzugt in dem Befestigungsabschnitt angeordnet, insbesondere mittig. Der Vorsprung kann in Richtung des Elements mit dem Nietnippel vorstehen. Bevorzugt steht der Vorsprung von der Unterseite des Betätigungselements vor. Der Vorsprung kann beispielsweise von einer gedachten Ebene vorstehen, in welcher der Befestigungsabschnitt angeordnet ist.

Vorzugsweise erstreckt sich der Vorsprung in der Offenstellung und/oder in der Schließstellung zumindest teilweise durch den Führungsschlitz. Vorzugsweise erstreckt sich der Vorsprung in der Offenstellung und in der Schließstellung zumindest teilweise durch den Führungsschlitz. Der Vorsprung kann so auch als Teil der Führung dienen. Zudem wird hierdurch vorzugsweise eine Sicherung des Betätigungselements gegen Verdrehen bereitgestellt. Der Vorsprung kann sich in der Schließstellung zumindest teilweise auch durch die Ausgussöffnung erstrecken.

Vorzugsweise ist die Verbindung, insbesondere ausgebildet als Nietverbindung, zumindest in einem Bereich, der sich durch den Führungsschlitz erstreckt, schmäler als der Führungsschlitz ausgebildet. Insbesondere kann der Vorsprung zumindest in einem Bereich, der sich durch den Führungsschlitz erstreckt, schmäler als der Führungsschlitz ausgebildet sein. Die Verbindung ist vorzugsweise zumindest in einem Bereich, der sich über und/oder unter dem Führungsschlitz erstreckt, breiter als der Führungsschlitz. Dadurch kann sich die Verbindung, insbesondere die Nietverbindung, dort am Deckelspiegel abstützen. Dadurch kann eine Spannung, beispielsweise aufgrund von Innendruck, abgestützt werden. Die Breite wird vorzugsweise in der Ebene des Deckelspiegels gemessen. Diese Ebene kann beispielsweise der Ebene, in der der Führungsschlitz ausgebildet ist, entsprechen. Die Breite wird vorzugsweise quer zu einer Längsachse gemessen, die sich zwischen einer vorderen Öffnung des Führungsschlitzes und einem hinteren Ende des Führungsschlitzes erstreckt, insbesondere orthogonal zu dieser Längsachse. Die Breite kann auch orthogonal zu einer Vertikalrichtung sein. Die Dicke kann in der Vertikalrichtung gemessen werden. Die Vertikalrichtung ist vorzugsweise senkrecht zur Ebene, in der sich der Deckelspiegel erstreckt.

Vorzugsweise ist an der Verbindung in einem Bereich, der sich durch den Führungsschlitz erstreckt, mindestens eine ebene Fläche ausgebildet, wobei die mindestens eine ebene Fläche vorzugsweise einem den Führungsschlitz begrenzenden Rand des Deckelspiegels zugewandt ist. Durch diese ebene Fläche kann sich die Verbindung an dem Führungsschlitz abstützen und so besonders gut als Verdrehsicherung fungieren. Vorzugsweise sind an der Verbindung in einem Bereich, der sich durch den Führungsschlitz erstreckt, mindestens zwei ebene Flächen ausgebildet. Die zwei ebenen Flächen sind bevorzugt an gegenüberliegenden Seiten und/oder im Wesentlichen parallel ausgebildet. Vorzugsweise ist die mindestens eine ebene Fläche am Vorsprung ausgebildet. Vorzugsweise sind die mindestens zwei ebenen Flächen am Vorsprung ausgebildet. Die jeweiligen ebenen Flächen können sich an dem den Führungsschlitz begrenzenden Rand des Deckelspiegels abstützen und eine Verdrehsicherung bereitstellen. Die Nietöffnung und/oder ein restlicher Vorsprung sind vorzugsweise rund, insbesondere kreisförmig, ausgebildet. Im Bereich der ebenen Fläche kann die runde Form abgeflacht sein. Ebenso kann der Nippel, insbesondere der Nietnippel, rund, insbesondere kreisförmig, ausgebildet sein.

Die jeweiligen ebenen Flächen erstrecken sich vorzugsweise in Richtung senkrecht zur Ebene des Deckelspiegels, also in Vertikal- bzw. Hochrichtung, und/oder parallel zur Längsachse des Führungsschlitzes und/oder parallel zu dem den Führungsschlitz begrenzenden Rand des Deckelspiegels. Statt einer ebenen Fläche kann auch eine gewölbte, gestufte oder gezahnte Fläche vorgesehen werden, die mindestens zwei definierte Anlagepunkte mit dem den Führungsschlitz begrenzenden Rand des Deckelspiegels bereitstellt. Auch so kann eine Verdrehsicherung bereitgestellt werden.

Optional kann am Verschluss und/oder Betätigungselement ein weiterer Vorsprung zur Führung vorgesehen werden.

Vorzugsweise weist der Dosendeckel wenigstens eine Dichtung auf, welche wenigstens in der Schließstellung des Verschlusselements zwischen dem Verschlusselement und dem Deckelspiegel angeordnet ist. Die Dichtung ist vorzugsweise aus einem weicheren Material als das Verschlusselement hergestellt. Zum Einsatz kommen können insbesondere Silikon, Kautschuk, Elastomere, Thermoplaste oder elastomerische Thermoplaste. Damit kann ein sicheres und druckdichtes wiederverschließen zuverlässig ermöglicht werden. Vorzugsweise ist nur eine einzige Dichtung vorgesehen, die an Kontaktstellen das Verschlusselement gegen den Deckelspiegel abdichtet. Vorzugsweise weist das Verschlusselement im Bereich der Verbindung mit dem Betätigungselement einen Abstützbereich auf. Vorzugsweise liegt das Verschlusselement entlang seines Außenrands nur über die Dichtung am Deckelspiegel an. Der Abstützbereich ist vorzugsweise mittig vorgesehen und liegt vorzugsweise ebenfalls am Deckelspiegel an. Zwischen Dichtung und Rand kann ein vertiefter Kanal vorgesehen sein.

Die Dichtung bildet vorzugsweise einen geschlossenen Umfang, etwa nach Art eines O-Rings. Der Querschnitt der Dichtung kann von einem runden Querschnitt abweichen. Die Dichtung kann aus einem flexiblen Material, wie Gummi, Kautschuk oder einem Kunststoff, gebildet sein. Die Dichtung kann umlaufend an einem Rand des Verschlusselements angeordnet sein.

Vorzugsweise ist die Dichtung zumindest teilweise in einer Nut aufgenommen, die auf einer Oberseite des Verschlusselements ausgebildet ist. Durch die Nut kann die Dichtung sicher gehalten werden, insbesondere bei wiederholtem Öffnen und Schließen. Die Nut kann in dem Verschlusselement radial außenseitig umlaufend angeordnet sein. Die Nut kann in dem Verschlusselement entlang eines Außenrands des Verschlusselements angeordnet sein. Vorzugsweise ist die Nut in Richtung des Deckelspiegels offen. Die Nut kann beispielsweise durch ein Prägen oder Tiefziehen hergestellt sein. Die Nut kann auch als eine Verformung in einer flachen Ebene eines Blechs ausgebildet sein, beispielsweise nach Art einer Sicke. Eine Materialstärke des Verschlusselements im Bereich der Nut kann in diesem Fall beispielsweise konstant bleiben. Die Nut kann auch durch eine lokale Dickenreduktion bereitgestellt werden, z.B. durch Eindrücken oder Abtragen des Materials des Verschlusselements.

Die Dichtung ist vorzugsweise mittels eines Außenrands des Verschlusselements an dem Verschlusselement fixiert, wobei der Außenrand in die Dichtung und/oder über einen Abschnitt der Dichtung gebogen ist. Dadurch kann die Dichtung besonders sicher an dem Verschlusselement gehalten sein. Dies kann bei der Montage vorteilhaft sein. Zudem kann die Dichtung so auch eine offene Schnittkante, beispielsweise bei einem aus einem Blech ausgestanzten Verschlusselement, bedecken. Beispielsweise kann diese Schnittkante ohne Kunststoffbeschichtung ausgebildet sein und so mit der Dichtung vor Korrosion und/oder Kontakt mit einer Flüssigkeit in der Dose geschützt werden. Vorteilhafterweise kann die Nut mit dem Außenrand in einem Falzprozess geklemmt werden. So kann auch eine scharfe Kante bedeckt werden. Die Dichtung ist vorzugsweise in einer Nut angeordnet und durch den Außenrand geklemmt. Der Außenrand kann radial außenseitig und umlaufend sein. Der Außenrand kann eine Stanz- oder Schnittkante sein. Der Außenrand kann in die Dichtung pressen. Durch dessen Biegung kann der Außenrand radial weiter innen angeordnet sein als ein sich daran anschließender Bereich des Verschlusselements.

Die Dichtung kann in der Nut befestigt sein, beispielsweise zusätzlich oder alternativ zu der Klemmung mit dem Außenrand, z.B. mittels einer Verklebung. Die Dichtung kann auch in die Nut eingespritzt sein.

Die Dichtung kann eine Hinterschneidung aufweisen. Die Hinterschneidung kann wenigstens teilweise in der Nut angeordnet sein oder auch außerhalb davon. Alternativ oder zusätzlich kann ein Querschnitt des in der Nut aufgenommenen Teilbereichs der Dichtung kleiner als ein Querschnitt der Nut sein. Alternativ kann die Dichtung eine sich von radial außen nach radial innen erstreckende Lippe aufweisen, optional mit einer Aussparung unter der Lippe. Die Hinterschneidung und/oder Lippe kann umlaufend ausgebildet sein. Ein Querschnitt der Dichtung kann entsprechend gestaltet sein, um die Lippe, Hinterschneidung und/oder den kleineren Querschnitt als die Nut aufzuweisen. Durch diese jeweiligen Gestaltungen kann das Verschlusselement mit geringeren Betätigungskräften verschoben werden. Zudem ist die Dichtwirkung erhöht. Außerdem kann die Dichtung im Wesentlichen gleich gut bei unterschiedlichen Anpressdrücken abdichten. Beispielsweise kann in einer Getränkedose je nach Temperatur und bei einem kohlensäurehaltigen Getränk durch Bewegungen der Innendruck variieren. Durch die Gestaltung der Dichtung kann über einen großen Innendruckbereich zuverlässig abgedichtet werden.

Die Dichtung kann einen runden, eckigen oder irregulären Querschnitt aufweisen.

Optional kann die Dichtung zwei Dichtlippen aufweisen, welche voneinander beabstandet wenigstens in der Schließstellung an dem Verschlusselement oder dem Deckelspiegel anliegen. Bevorzugt liegen die zwei Dichtlippen an einer Unterseite des Deckelspiegels an, wobei die Dichtung in der Nut am Verschlusselement angeordnet ist. Die doppelte Dichtlippe ermöglicht ein sicheres Abdichten auch bei geringem Innendruck, beispielsweise bei einem Getränk ohne Kohlensäure. Es können auch zwei separate Dichtungen mit jeweils mindestens einer Lippe vorgesehen sein.

Vorzugsweise weist der Deckelspiegel und/oder das Verschlusselement eine Kerbe und/oder Prägung in einem Teilbereich auf, welcher einem Teilbereich der Ausgussöffnung, welcher bei dem Verstellen des Verschlusselements von der Schließstellung in die Offenstellung zuerst freigegeben wird, benachbart angeordnet ist oder diesen Teilbereich begrenzt. Dadurch kann bei einer unter Druck stehenden Dose beim Öffnen ein Zischgeräusch erzeugt werden. Dadurch kann einem Verbraucher die frische des Inhalts signalisiert werden. Zudem kann die Akustik so beim Öffnen ähnlich zu einer nicht wiederverschließbaren Dose sein, womit für den Verbraucher eine größere Ähnlichkeit zu den Effekten beim Öffnen und Schließen mit einer herkömmlichen Dose erreicht wird. Die Kerbe oder Prägung kann bei Beginn des Öffnungsvorgangs einen kleinen Kanal und/oder eine Düse bilden. Beispielsweise kann sich die Prägung oder Kerbe verjüngen. Das Zischen kann beispielsweise durch eine Beschleunigung des austretenden Gases auf Überschall erzeugt werden.

Die Kerbe oder Prägung ist vorzugsweise im Bereich des vorderen Endes der Ausgussöffnung angeordnet, welcher einem Scheitelpunkt der Ausgussöffnung entsprechen kann. In der Schließstellung kann das Verschlusselement die Kerbe oder Prägung überlappen. In der Offenstellung kann das Verschlusselement überlappungsfrei mit der Kerbe oder Prägung sein.

Vorzugsweise weist der Deckelspiegel ferner eine Druckausgleichöffnung auf. Die Druckausgleichöffnung kann ebenfalls ein Zischen beim Beginn eines Öffnungsvorgangs erzeugen. Zudem kann eine Betätigungskraft zum Verstellen des Verschlusselements aus der Schließstellung in die Offenstellung reduziert werden. Vorzugsweise ist die Druckausgleichöffnung in der Schließstellung von dem Verschlusselement fluiddicht und/oder gasdicht verschlossen und in der Offenstellung wenigstens teilweise freigegeben. Die Druckausgleichöffnung kann derart angeordnet sein, dass diese beim Verstellen des Verschlusselements von der Schließstellung in die Offenstellung vor der Ausgussöffnung freigegeben wird. Die Druckausgleichöffnung kann als separate Öffnung ausgebildet sein, welche nicht mit der Ausgussöffnung und/oder dem Führungsschlitz verbunden ist. Beispielsweise kann es sich um eine Durchgangsöffnung in dem Deckelspiegel handeln, welche in Verschiebungsrichtung zur Offenstellung vor der Ausgussöffnung angeordnet ist. Die Druckausgleichöffnung ist vorzugsweise im Bereich des vorderen Endes der Ausgussöffnung angeordnet, insbesondere am Scheitelpunkt der Ausgussöffnung. In der Schließstellung kann das Verschlusselement die Druckausgleichöffnung überlappen. In der Offenstellung kann das Verschlusselement überlappungsfrei mit der Druckausgleichöffnung sein.

Die Querschnittfläche der Druckausgleichöffnung ist vorzugsweise kleiner als die Querschnittfläche der Ausgussöffnung. Eine Querschnittfläche der Druckausgleichöffnung kann beispielsweise höchstens 20 mm², bevorzugt höchstens 10 mm² oder besonders bevorzugt höchstens 5 mm² sein. Bevorzugt ist die Druckausgleichöffnung kleiner als ein üblicher Querschnitt eines Strohhalms, welcher auch als Trinkhalm bezeichnet werden kann.

In der Offenstellung ist vorzugsweise zwischen dem Verschlusselement und dem Deckelspiegel ein Luftkanal gebildet, dessen erstes Ende vorzugsweise an der Oberseite des Deckelspiegels und/oder an einem dem äußeren Deckelspiegelrand abgewandten Endbereich an der Ausgussöffnung mündet und dessen zweites Ende vorzugsweise an einer Unterseite des Deckelspiegels an einem der Ausgussöffnung abgewandten Endbereich des Verschlusselements mündet. Das zweite Ende kann einen Innenraum der Dose mit der Außenseite und/oder der Ausgussöffnung verbinden. Dadurch wird eine Rückströmung von Luft erleichtert und/oder die Stärke einer Rückströmung vorgegeben. Dies kann das Ausgießen erleichtern. Beispielsweise kann der Luftkanal einem irregulären und/oder gluckernden Ausguss von Flüssigkeit vorbeugen. So wird ein gleichmäßigeres Ausgießen ermöglicht.

Vorzugsweise ist der Luftkanal in der Schließstellung und/oder in einer Zwischenstellung des Verschlusselements zwischen der Offenstellung und Schließstellung blockiert. Beispielsweise kann der Luftkanal blockiert sein, indem ein Ende oder beide Enden verschlossen sind. Die Zwischenstellung kann beispielsweise eine Stellung, bei welcher die Ausgussöffnung nicht so weit wie möglich freigegeben ist, beispielsweise nur höchstens 80%, 70% oder bevorzugt 50%. Das Blockieren kann insbesondere durch das Dichtelement erfolgen, das über den gesamten Umfang des Verschlusselements an einer Unterseite des Deckels anliegt. Beispielsweise kann das Verschlusselement in der Schließstellung und/oder in der Zwischenstellung nicht von dem Deckelspiegel bereichsweise abgehoben sein, was sonst den Luftkanal frei gibt (insbesondere das zweite Ende).

Vorzugsweise ist wenigstens ein Teilbereich des Luftkanals durch eine Vertiefung in dem Verschlusselement und/oder dem Deckelspiegel gebildet. Die Vertiefung kann beispielsweise durch eine Prägung gebildet sein. Durch die Vertiefung in dem Deckelspiegel kann das Verschlusselement besonders einfach gestaltet sein. Durch die Vertiefung in dem Verschlusselement kann der Deckelspiegel besonders robust und kostengünstig sein.

Vorzugsweise ist das erste Ende des Luftkanals in der Offenstellung durch eine Lücke zwischen dem Verschlusselement und dem Betätigungselement und/oder zwischen der Dichtung und dem Betätigungselement gebildet, wobei in der Schließstellung vorzugsweise ein Teilbereich des Deckelspiegels in der Lücke angeordnet ist und dadurch den Luftfluss blockiert. Die Lücke kann dabei einfach durch Verschieben des Betätigungselements und damit des Verschlusselements in die Schließstellung geschlossen werden. Eine solche Bauweise ist kinematisch einfach und zuverlässig.

Vorzugsweise ist das zweite Ende des Luftkanals in der Offenstellung durch eine Lücke zwischen dem Verschlusselement und dem Deckelspiegel und/oder zwischen der Dichtung und dem Deckelspiegel gebildet.

Gemäß einer ersten Variante wird die Lücke durch ein Auslenken des Verschlusselements an einem dem Verschlusselement zugewandten Vorsprung des Deckelspiegels oder einer Sicke gebildet, insbesondere in der Offenstellung. Für das Auslenken kann sich der Deckelspiegel, das Betätigungselement und/oder das Verschlusselement elastisch verformen. Dadurch kann auf jeweilige Gelenke zum Bilden des Luftkanals verzichtet werden. Insbesondere kann das Verschlusselement in der Offenstellung an einer radial äußeren Sicke des Deckelspiegels nach unten ausgelenkt werden, wodurch die Dichtwirkung des Verschlusselements mit der Unterseite des Deckelspiegels im ausgelenkten Bereich aufgehoben ist. Das Verschlusselement kann nach unten gekippt werden. Eine rotatorische Auslenkung nach unten, welche auch als Kippen bezeichnet werden kann, erfolgt beispielsweise durch eine Verformung, insbesondere eine elastische Verformung. Das Verschlusselement und/oder die Dichtung wird entlang eines Endbereichs, der von der Ausgussöffnung abgewandt ist, beispielsweise nach unten ausgelenkt. Der Endbereich des Verschlusselements und/oder die Sicke am Deckelspiegel können nach Art einer Rampe zum bereichsweisen Abheben des Verschlusselements vom Deckelspiegel wirken. Der Rand des Verschlusselements kann zumindest Abschnittsweise für ein Abheben abgeschrägt sein, insbesondere in einem Bereich, der von der Ausgussöffnung abgewandt ist. Alternativ oder zusätzlich kann der Deckelspiegel ein oder mehrere in Richtung der Unterseite vorstehende Prägungen aufweisen, die das Verschlusselement in der Offenstellung zumindest abschnittsweise nach unten auslenken, wodurch die Dichtwirkung des Verschlusselements mit der Unterseite des Deckelspiegels im ausgelenkten Bereich aufgehoben ist.

Gemäß einer zweiten Variante wird das zweite Ende des Luftkanals in der Offenstellung dadurch gebildet, dass der Deckelspiegel eine oder mehrere in Richtung der Oberseite vorstehende Prägungen aufweist, wobei die Prägungen in der Offenstellung des Verschlusselements einen Umströmungsweg für die Luft um das Verschlusselement bilden (insbesondere um die Dichtung), wodurch die Dichtwirkung des Verschlusselements mit der Unterseite des Deckelspiegels im Bereich der einen oder mehreren Prägungen aufgehoben ist. Bei dieser Variante kann das Verschlusselement ebenfalls frei von Gelenken für ein Verschwenken des Verschlusselements relativ zum Deckelspiegel sein.

Wird der Dosendeckel entlang einer Achse senkrecht zum Deckelspiegel, d.h. bei üblichen Getränkedosen in Vertikalrichtung, betrachtet, ist das Verschlusselement vorzugsweise so angeordnet, dass es in der Offenstellung mit dem einen oder den mehreren in Richtung der Oberseite und/oder in Richtung der Unterseite vorstehenden Vorsprüngen oder Prägungen oder mit der Sicke des Deckelspiegels überlappt, vorzugsweise in einem hinteren Randbereich. In der Schließstellung überlappt das Verschlusselement die Vorsprünge oder Prägungen bzw. die Sicke nicht. Der hintere Randbereich kann als ein Randbereich definiert sein, der von der Ausgussöffnung abgewandt ist und/oder von der Ausgussöffnung am weitesten entfernt ist..

Vorzugsweise bilden der Führungsschlitz und die Ausgussöffnung eine gemeinsame Durchgangsöffnung in dem Deckelspiegel. Die Ausgussöffnung und der Führungsschlitz sind vorzugsweise miteinander verbunden. Der Führungsschlitz weist vorzugsweise eine vordere Öffnung auf, an welcher der Führungsschlitz zur Ausgussöffnung hin offen ist, und erstreckt sich von dort, vorzugsweise gerade, zu einem hinteren Ende. Durch das gemeinsame Ausbilden können der Führungsschlitz und die Ausgussöffnung kostengünstig zusammen gefertigt werden, beispielsweise durch ein einzelnes Stanzen.

Vorzugsweise ist der Führungsschlitz länglich ausgebildet, wobei eine Längsrichtung des Führungsschlitzes einer Verschiebungsrichtung des Verschlusselements entspricht. Die Längsrichtung des Führungsschlitzes kann einer Verstellbewegung des Betätigungselements beim Öffnen und Schließen entsprechen. Der Führungsschlitz ist vorzugsweise gerade und/oder wenigstens teilweise mittig im Deckelspiegel angeordnet. Der Führungsschlitz ist bevorzugt mindestens 0,7 cm, bevorzugter mindestens 1 cm und besonders bevorzugt mindestens 2,5 cm lang. Beispielsweise kann der Führungsschlitz 2,5 cm lang sein. So kann eine große Ausgussöffnung freigegeben werden. Der Führungsschlitz ist vorzugsweise mindestens 2 mm, bevorzugter mindestens 3 mm und besonders bevorzugt mindestens 4 mm breit. Beispielsweise kann der Führungsschlitz 3 mm breit sein. Dadurch kann die Verbindung von Verschlusselement und Betätigungselement ausreichend stabil ausgebildet werden. Der Führungsschlitz kann beispielsweise rechteckig ausgebildet sein.

Das Betätigungselement wirkt vorzugsweise als Tellerfeder, die sich in einem Außenbereich am Deckelspiegel abstützt und so einen Mittenbereich des Betätigungselements, der um die Verbindung vorgesehen ist, vom Deckelspiegel wegdrückt. Hierdurch wird vorzugsweise über die Verbindung das Verschlusselement an die Unterseite des Deckelspiegels gepresst. Der Mittenbereich kann gegenüber dem Außenbereich zurückgesetzt sein. Das Betätigungselement kann sich über den Außenbereich an der Oberseite des Deckelspiegels abstützten, wodurch eine Oberseite des Verschlusselements und/oder eine Oberseite der Dichtung gegen die Unterseite des Deckelspiegels gepresst wird. Diese Abstützung kann durch eine Bombierung verstärkt sein und/oder der Mittenbereich als Bombierung wirken. Die Bombierung kann einer Konkavität entsprechen. Der Bereich der Verbindung selbst wird hierbei vorzugsweise nicht zum Mittenbereich gezählt. Insbesondere wird der Vorsprung mit der Nietöffnung vorzugsweise nicht zum Mittenbereich gezählt. Der Mittenbereich liegt vorzugsweise nicht am Deckelspiegel an. Das Betätigungselement ist somit von dem Deckelspiegel vorzugsweise nach oben in dem Mittenbereich weggewölbt, wodurch der Außenbereich aufgrund der Verbindung mit dem Verschlusselement an den Deckelspiegel angepresst werden kann. So kann auch bei unterschiedlichen Innendrücken eine im Wesentlichen gleiche Betätigungskraft vorgegeben werden.

Vorzugsweise weist der Führungsschlitz an seinem von der Ausgussöffnung abgewandten Ende wenigstens eine oder mehrere Entlastungskerben auf. Das abgewandte Ende kann ein hinteres Ende des Führungsschlitzes sein. Die Entlastungskerben können einen Radius in Ecken von einem ansonsten rechteckigem Querschnitt bilden. Die Entlastungskerben können beispielsweise so ausgestanzt sein, dass dieses Ende keinen rechten Winkel aufweist. Dadurch kann bei hohen Innendrücken ein Einreißen des Deckelspiegels und/oder ein Aufplatzen des Deckels verhindert werden. Jeweilige Entlastungskerben erstrecken sich vorzugsweise im Wesentlichen senkrecht zur Längsrichtung des Verschlusselements. Die jeweiligen Entlastungskerben sind vorzugsweise gekrümmt, wobei ein Mittelpunkt des Krümmungskreises vorzugsweise näher am Mittelpunkt des Deckelspiegels liegt als die Entlastungskerbe. Die jeweiligen Entlastungskerben können beispielsweise bogenförmig ausgebildet sein. Eine Länge der Entlastungskerbe, insbesondere eine Bogenlänge, kann größer als die Breite des Führungsschlitzes sein.

Vorzugsweise weist das Betätigungselement wenigstens einen Befestigungsabschnitt, in welchem die Verbindung, insbesondere die Nietverbindung oder die Schweißverbindung, mit dem Verschlusselement ausgebildet ist, und einen damit verbundenen Griffabschnitt, welcher zum Greifen Zwecks der Verstellung zwischen der Offenstellung und der Schließstellung ausgebildet ist, auf. Die Abschnitte des Betätigungselements können einstückig ausgebildet sein und/oder im Wesentlichen flach. Insbesondere kann das Betätigungselement durch ein einzelnes Blechelement gebildet sein, welches zum Bilden der Abschnitte verformt wurde, insbesondere gebogen. Der Befestigungsabschnitt ist vorzugsweise flach und/oder in Richtung senkrecht zum Deckelspiegel weniger als 3 mm, bevorzugt weniger als 2 mm, dick. Die Oberseite des Befestigungsabschnitts ist vorzugsweise im Wesentlichen eben ausgebildet, optional abgesehen von der Vertiefung für die Nietverbindung. Der Befestigungsabschnitt und/oder der Griffabschnitt erstreckt sich vorzugsweise wenigstens vor einem erstmaligen Öffnen im Wesentlichen parallel zur Oberseite, insbesondere zu einem Mittenbereich, des Deckelspiegels. Der Befestigungsabschnitt erstreckt sich vorzugsweise auch nach erstmaligem Öffnen im Wesentlichen parallel zur Oberseite des Deckelspiegels, insbesondere auch bei Verschiebung entlang des Führungsschlitzes. Der Griffabschnitt ist vorzugsweise an einem der Ausgussöffnung abgewandten Endbereich des Betätigungselements ausgebildet, wodurch dessen Betätigung besonders ergonomisch ist. Zudem ist der Griffabschnitt so besonders gut vor Verunreinigungen durch einen Doseninhalt geschützt.

Vorzugsweise ist der Griffabschnitt zwischen einer Verstaustellung, in welcher der Griffabschnitt im Wesentlichen parallel zu dem Deckelspiegel und/oder dem Befestigungsabschnitt angeordnet ist, und einer Betätigungsstellung, in welcher der Griffabschnitt für das Verstellen zwischen der Offenstellung und der Schließstellung greifbar ist, schwenkbar, vorzugsweise manuell schwenkbar (also direkt mit der Hand). Die Stapelhöhe des Dosendeckels beim Abfüllen ist so besonders gering, aber der Griffabschnitt beim Betätigen trotzdem einfach zu greifen. Der Griffabschnitt ist vorzugsweise flach und in der Verstaustellung in Richtung senkrecht zum Deckelspiegel weniger als 3 mm, bevorzugt weniger als 2 mm, dick. Eine Oberseite des Griffabschnitts ist vorzugsweise im Wesentlichen eben. In der Verstaustellung bilden die Oberseite des Befestigungsabschnitts und die Oberseite des Griffabschnitts im Wesentlichen eine Ebene. Wenn sich der Griffabschnitt in der Verstaustellung befindet, kann das Betätigungselement im Wesentlichen plan sein. Bei Verstellung von der Verstaustellung in die Betätigungsstellung wird der Griffabschnitt vorzugsweise nach oben geschwenkt. Insbesondere wird ein hinterer Endbereich des Griffabschnitts, der von der Ausgussöffnung am weitesten beabstandet ist, nach oben geschwenkt. Vorzugsweise ist die Unterseite des Griffabschnitts in der Verstaustellung zumindest abschnittsweise von der Oberseite des Deckelspiegels beabstandet. Der Griffabschnitt kann dadurch manuell, insbesondere mit einem Finger, beispielsweise mittels des Fingernagels, einfach angehoben werden. Vorzugsweise ist die Unterseite des Griffabschnitts in der Betätigungsstellung zumindest abschnittsweise, und vorzugsweise vollständig, von der Oberseite des Deckelspiegels beabstandet. Der Griffabschnitt kann dadurch wenigstens teilweise umfasst werden, etwa mit zwei Fingern, sodass Kraft in einer Richtung parallel zur Oberseite des Deckelspiegels ausgeübt werden kann, insbesondere manuell. Ein Schwenken des Griffabschnitts kann ein Hochklappen sein, vorzugsweise Hochklappen um einen Winkel von mindestens 30°, bevorzugt mindestens 45°, besonders bevorzugt mindestens 60°. Vorzugsweise wird der Griffabschnitt entgegen der Bewegungsrichtung des Betätigungselements und/oder des Verschlusselements von der Schließstellung in die Offenstellung nach oben geschwenkt. Der Mittenbereich kann durch den Griffabschnitt und/oder durch den Befestigungsabschnitt gebildet sein.

Vorzugsweise sind der Befestigungsabschnitt und der Griffabschnitt mittels eines Gelenks verbunden, insbesondere mittels eines Filmscharniers, dessen Gelenkachse sich vorzugsweise quer, bevorzugt orthogonal zu einer Längsachse des Führungsschlitzes erstreckt. Das Filmscharnier erstreckt sich vorzugsweise quer zur Längsachse des Führungsschlitzes über die gesamte Breite des Betätigungselements, insbesondere über die gesamte Breite des Befestigungsabschnitts und/oder des Griffabschnitts, vorzugsweise entlang einer gedachten geraden Linie. Optional kann das Filmscharnier durchgehend oder aus mehreren separaten Abschnitten ausgebildet sein.

Das Filmscharnier ist vorzugsweise so ausgelegt, dass er beim Schwenken des Griffabschnitts nicht bricht, insbesondere nicht bei einem ersten Schwenken und vorzugsweise auch nicht bei einem wiederholten Schwenken (etwa mindestens 5 mal, mindestens 10 mal, mindestens 20 mal oder mehr).

Der Griffabschnitt kann dazu ausgebildet sein, zum Verstellen zwischen der Verstaustellung und der Betätigungsstellung relativ zu dem Befestigungsabschnitt um die Gelenkachse geschwenkt zu werden. Das Gelenk erleichtert die Betätigung des Betätigungselements, insbesondere das Verschwenken des Griffabschnitts. Das Filmscharnier kann durch einen Bereich im Betätigungselement mit geringerer Gesamtdicke gebildet sein, insbesondere in Form einer Kerbe, die z.B. durch Prägen oder Ritzen hergestellt sein kann. Der dünnere Bereich, insbesondere in Form der Kerbe, erstreckt sich vorzugsweise von der Oberseite des Betätigungselements in dieses hinein, insbesondere nach unten. Das Filmscharnier kann weiterhin den Vorteil haben, dass sich dieser verformt und der Griffabschnitt auch entgegen der Schwerkraft in der Betätigungsstellung verbleibt.

Vorzugsweise hat der Griffabschnitt eine Ausgangsstellung, welche vorzugsweise der Verstaustellung entspricht. Das Betätigungselement kann so ausgebildet sein, dass sich der Griffabschnitt nach einem erstmaligen Verstellen aus der Ausgangsstellung nicht mehr bleibend in die Ausgangsstellung rückverstellen lässt. Alternativ oder zusätzlich kann das Betätigungselement so ausgebildet sein, dass es sich bei einem erstmaligen Verstellen des Griffabschnitts aus der Ausgangsstellung plastisch verformt, insbesondere dauerhaft und/oder bleibend optisch erkennbar. Beispielsweise kann der Griffabschnitt in der Betätigungsstellung verbleiben. Der Griffabschnitt kann sich selbstständig lediglich in eine teilwiese rückverstellte Stellung rückverstellen, welche sich insbesondere optisch von der Ausgangsstellung unterscheidet. Insbesondere kann keine Rückverformung in die Ausgangstellung durch einen bestimmungsgemäßen Gebrauch erfolgen. Die Verformung kann so ausgebildet sein, dass diese nicht ohne optisch erkennbar zu sein vom Nutzer rückgängig gemacht werden kann. Dadurch kann ein Originalitätsmerkmal bereitgestellt werden, an welchem ein Nutzer erkennen kann, ob eine Dose bzw. ein Dosendeckel bereits geöffnet gewesen ist. Dies ist insbesondere aus Hygienegründen vorteilhaft.

Vorzugsweise ist ein äußerer Rand des Betätigungselements gerundet, vorzugsweise gefalzt. Dadurch können scharfe Kanten vermieden werden, welche bei einer Betätigung andernfalls für den Nutzer unangenehm sein können. Vorzugsweise ist ein äußerer Rand des Befestigungsabschnitts und/oder des Griffabschnitts gerundet, insbesondere gefalzt, ausgebildet. Insbesondere kann der äußere Rand nach innen gebogen sein, vorzugsweise in Richtung der Unterseite des Betätigungselements.

Vorzugsweise weist das Betätigungselement einen Arretierabschnitt auf, mittels welchem das Betätigungselement vor einem erstmaligen Verstellen aus der Schließstellung in die Offenstellung an dem Deckelspiegel in der Schließstellung arretiert ist. Dadurch kann ein unbeabsichtigtes Öffnen vermieden werden. Der Arretierabschnitt kann auch als Transportsicherung fungieren. Insbesondere kann die Arretierung durch einen Formschluss und/oder eine Schnappverbindung des Arretierabschnitts mit dem Deckelspiegel gebildet sein. Der Arretierabschnitt ist vorzugsweise zwischen einem von der Ausgussöffnung beabstandeten Ende des Griffabschnitts und dem Befestigungsabschnitt angeordnet.

Vorzugsweise weist der Arretierabschnitt ein von der Unterseite des Betätigungselements nach unten vorstehendes Arretierelement auf. So kann die Arretierung vor Manipulation geschützt sein. Der Arretierabschnitt ist vorzugsweise einstückig mit dem Betätigungselement ausgebildet und damit auch das Arretierelement. Der Arretierabschnitt ist vorzugsweise so ausgebildet, dass ein Aufschieben des Betätigungselements ohne Anheben des Griffabschnitts den Griffabschnitt nach oben drückt, insbesondere aus seiner Ausgangsstellung hinaus, bevorzugt mit einer irreversiblen Verformung. So kann eine zusätzlicher Schutz gegen nicht erkennbares erstmaliges Öffnen bereitgestellt werden.

Vorzugsweise ist das Arretierelement als Haken ausgebildet. Der Haken ist vorzugsweise L-förmig ausgebildet. Der Haken kann einstückig mit dem restlichen Arretierabschnitt ausgebildet sein.

Vorzugsweise ist das Arretierelement vor einem erstmaligen Verstellen aus der Schließstellung in die Offenstellung im Führungsschlitz angeordnet, vorzugsweise an einem von der Ausgussöffnung abgewandten Endbereich des Führungsschlitzes, und greift dort mit dem Deckelspiegel ein. Die Breite des Hakens ist vorzugsweise kleiner als die Breite des Führungsschlitzes an der Stelle des Eingriffs. Eine Dicke des Hakens, beispielsweise gemessen in Richtung der Längsachse des Führungsschlitzes, ist vorzugsweise geringer als die Breite des Hakens. Ein Haken ist ein sehr simples Arretierelement, welches zudem besonders einfach gefertigt werden kann, insbesondere wenn das Betätigungselement aus einem Blech geformt wird.

Vorzugsweise ist das Arretierelement vor einem erstmaligen Verstellen des Betätigungselements aus der Schließstellung in die Offenstellung in einer Vertiefung des Verschlusselements angeordnet. Dadurch kann der Dosendeckel auch mit Arretierelement eine besonders geringe Bauhöhe aufweisen. Die Vertiefung kann beispielsweise durch Tiefziehen oder Prägen hergestellt sein. Die Vertiefung kann auch eine Nut sein, insbesondere eine rotationssymmetrische Nut. Die Vertiefung kann auch Teil des bereits beschriebenen Luftkanal sein, wodurch auf eine zusätzliche Vertiefung verzichtet werden kann.

Vorzugsweise wirkt der Arretierabschnitt formschlüssig einem Bewegen des Betätigungselements aus der Schließstellung in die Offenstellung entgegen. Insbesondere ein Verstellen des Griffabschnitts aus der Verstaustellung kann ein Lösen der Arretierung bewirken, insbesondere ein dauerhaftes Lösen, bevorzugt durch ein Verformen des Arretierelements des Arretierabschnitts. Die Verformung kann beispielsweise plastisch sein, also bevorzugt dauerhaft. Der Arretierabschnitt ist vorzugsweise dazu ausgebildet, gemeinsam mit dem Griffabschnitt bewegt zu werden. Dafür kann der Arretierabschnitt am Griffabschnitt ausgebildet sein und/oder können Arretierabschnitt und Griffabschnitt aneinander befestigt sein und/oder der Arretierabschnitt nur über den Griffabschnitt mit dem Befestigungsabschnitt verbunden sein. Der Griffabschnitt und der Arretierabschnitt können wenigstens teilweise ein gemeinsamer Abschnitt des Betätigungselements sein.

Der Arretierabschnitt ist vorzugsweise mit dem Befestigungsabschnitt über ein Gelenk verbunden, insbesondere über ein Filmscharnier. Bei diesem Gelenk, insbesondere bei diesem Filmscharnier, handelt es sich vorzugsweise um dasselbe Filmscharnier, über das auch der Griffabschnitt mit dem Betätigungselement verbunden ist.

Vorzugsweise ist der Arretierabschnitt an einer Unterseite des Griffabschnitts angeordnet. Dadurch kann eine Gesamtfläche, welche das Betätigungselement an der Oberseite des Deckelspiegels einnimmt, besonders klein sein. Der Arretierabschnitt erstreckt sich vorzugsweise nicht über den Rand des Griffabschnitts hinaus.

Vorzugsweise sind der Arretierabschnitt und der Griffabschnitt durch zwei unterschiedliche Materiallagen gebildet. Beispielsweise kann der Arretierabschnitt ein Bereich eines Blechs sein, welches auf den Griffabschnitt gefaltet wurde, insbesondere an dessen Unterseite.

Die zwei Materiallagen sind vorzugsweise einstückig ausgebildet, wobei ein Teilbereich eines Rands des Griffabschnitts einen Übergang zwischen dem Arretierabschnitt und dem Griffabschnitt bildet. Bevorzugt weist dieser Übergang gegenüber dem übrigen Griffabschnitt eine geringere Gesamtdicke auf, um ein Untergreifen zum Schwenken des Griffabschnitts aus der Verstaustellung zu erleichtern.

Vorzugsweise ist der Arretierabschnitt durch einen umgefalzten Rand des Griffabschnitts am Griffabschnitt fixiert. So kann ein scharfkantiger Außenrand verhindert werden, während gleichzeitig der Arretierabschnitt an den Griffabschnitt geklemmt ist. Beispielsweise kann ein Rand des Griffabschnitts nach innen umgebogen sein, vorzugsweise in Richtung der Unterseite des Griffabschnitts.

Der Arretierabschnitt kann dazu ausgebildet sein, nach einem Wiederverschließen des Verschlusses erneut an dem Deckelspiegel zu arretieren. So kann weiterhin ein ungewolltes Öffnen verhindert werden. Beispielsweise kann das Arretierelement wieder an dem Deckelspiegel einrasten, wenn das Betätigungselement erneut in die Schließstellung und/oder der Griffabschnitt in die Verstaustellung verstellt wird.

Vorzugsweise ist das Betätigungselement einstückig ausgebildet. Insbesondere kann der Arretierabschnitt mit Arretierelement, der Griffabschnitt und der Befestigungsabschnitt einstückig aus einem Blech geformt oder einstückig durch Spritzguss hergestellt sein.

Vorzugsweise weist das Verschlusselement wenigstens einen Stützabschnitt auf. Der Stützabschnitt kann an der Unterseite des Deckelspiegels in wenigsten einem Bereich anliegen, welcher der Position des Gelenks zwischen dem Griffabschnitt und dem Betätigungsabschnitt entspricht. Es kann also eine Überlappung des Stützabschnitts mit dem Gelenk in Vertikalrichtung vorliegen. Der Stützbereich kann beispielsweise ein Bereich sein, welcher frei von Prägung und/oder Vertiefung, insbesondere für den Luftkanal, ist. Der Stützbereich kann an dem Deckelspiegel anliegen. Durch den Stützbereich kann eine ungewollte Verformung des Deckelspiegels und/oder dessen Überlastung beim Hochklappen des Griffabschnitts vermieden werden. Zudem kann das Hochklappen erleichtert werden. Der Stützbereich ist vorzugsweise wenigstens in einem Endbereich des Gelenks in Richtung der Gelenkachse vorgesehen, da dort der Deckelspiegel besonders belastet wird. Der Stützbereich kann dort das Gelenk und auch den Deckelspiegel stützen. Vorzugsweise sind zwei Stützabschnitte vorgesehen, je einer pro Endbereich. Vorzugsweise verläuft der Luftkanal zwischen diesen Stützabschnitten. Alternativ kann der Luftkanal beispielsweise auch außerhalb der Stützabschnitte verlaufen.

Ein zweiter Aspekt betrifft eine Dose. Vorzugsweise ist die Dose als Getränkedose und/oder als Aufbewahrungsbehälter für Schüttgut ausgebildet. Die Dose kann wenigstens einen Dosendeckel gemäß dem ersten Aspekt aufweisen. Der Deckelspiegel und auch der Dosendeckel kann eine Oberseite der Dose begrenzen und schließt dort deren Innenraum ab, insbesondere durch Bördeln eines äußeren umlaufenden Rands des Deckelspiegels mit einer seitlichen Wand der Dose. Die Dose kann einen Dosenkörper aufweisen, welcher beispielsweise einstückig in einem Tiefziehverfahren hergestellt wird und mit dem Dosendeckel nach Befüllen der Dose verbunden wird. Der Dosenkörper kann oberseitig offen sein und/oder eine Durchgangsöffnung aufweisen. Diese kann von dem Deckelelement verschlossen sein. Die Dose ist bevorzugt zylindrisch ausgebildet und/oder mit einem in Richtung des Innenraums gewölbten Boden.

Ein dritter Aspekt betrifft ein Verfahren zum Herstellen eines Dosendeckels für eine Dose. Vorzugsweise ist die Dose als Getränkedose und/oder als Aufbewahrungsbehälter für Schüttgut ausgebildet. Das Verfahren ist vorzugsweise zur Herstellung eines Dosendeckels gemäß dem ersten Aspekt ausgebildet. Das Verfahren kann einen oder mehrere der folgenden Schritte aufweisen:
- Bereitstellen eines Deckelspiegels, welcher dazu ausgebildet ist, eine Oberseite der Dose zu begrenzen, insbesondere durch Bördeln eines äußeren umlaufenden Rands des Deckelspiegels mit einer seitlichen Wand der Dose, wobei der Deckelspiegel wenigstens eine Ausgussöffnung, durch welche ein in der Dose befindlicher Stoff ausgeschüttet werden kann, und einen Führungsschlitz aufweist; und/oder
- Bereitstellen eines Betätigungselements und eines Verschlusselements gebildet aus einem metallischen Werkstoff, vorzugsweise aus einem Aluminiumwerkstoff oder Weißblech; und/oder
- Anordnen des Verschlusselements an einer Unterseite des Deckelspiegels, welche einem Innenraum der Dose bei daran angebrachtem Dosendeckel zugewandt ist; und/oder
- Anordnen des Betätigungselements an einer Oberseite des Deckelspiegels, welche einem Innenraum der Dose bei daran angebrachtem Dosendeckel abgewandt ist; und/oder
- Befestigen des Verschlusselements und des Betätigungselements mittels einer Verbindung miteinander, wobei die Verbindung entlang des Führungsschlitzes bewegbar ist.

Das Verschlusselement kann mittels des Betätigungselements zwischen einer Schließstellung, in welcher das Verschlusselement die Ausgussöffnung fluiddicht und/oder gasdicht verschließt, und einer Offenstellung, in welcher das Verschlusselement die Ausgussöffnung wenigstens teilweise freigibt, im Wesentlichen translatorisch entlang des Deckelspiegels geführt verschoben werden.

Das Betätigungselement weist vorzugsweise einen Arretierabschnitt auf, mittels welchem das Betätigungselement vor einem erstmaligen Verstellen aus einer Schließstellung in die Offenstellung in der Schließstellung an dem Deckelspiegel arretiert ist.

Die Verbindung zwischen dem Verschlusselement und dem Betätigungselement kann bevorzugt als Schweißverbindung oder Nietverbindung ausgebildet sein. Entsprechend können das Verschlusselement und das Betätigungselement mittels Vernieten oder Verschweißen miteinander befestigt werden. Vorzugsweise durchdringt die Verbindung nicht das Verschlusselement.

Das Bereitstellen des Deckelspiegels weist vorzugsweise den folgenden Schritt auf:
- Einbringen, insbesondere Stanzen oder Ausschneiden, der Ausgussöffnung und/oder des Führungsschlitzes, insbesondere als gemeinsame Durchgangsöffnung;
sowie optional einen oder mehrere der folgenden Schritte:
- Einbringen von Prägungen, die in der Offenstellung ein Freigeben eines Luftkanals des Verschlusselements bewirken; und/oder
- Einbringen, insbesondere Stanzen oder Ausschneiden, einer zusätzlichen Druckausgleichöffnung, welche von der Ausgussöffnung beabstandet ist und beim Verstellen von der Schließstellung in die Offenstellung zuerst freigegeben wird; und/oder
- Einbringen, insbesondere Stanzen oder Ausschneiden, einer Kerbe oder Prägung in einem Teilbereich, welcher einem Teilbereich der Ausgussöffnung, der beim Verstellen des Verschlusselements von der Schließstellung in die Offenstellung zuerst freigegeben wird, benachbart angeordnet ist und/oder diesen Teilbereich begrenzt; und
- Einbringen, insbesondere Stanzen oder Ausschneiden, einer Entlastungskerbe an einem von der Ausgussöffnung abgewandten Ende des Führungsschlitzes.

Das Bereitstellen des Betätigungselements weist vorzugsweise einen oder mehrere der folgenden Schritte auf:
- Formen des Betätigungselements aus einem einzelnen Blechelement; und/oder
- Einbringen eines Gelenks zwischen einem Befestigungsabschnitt und einem Griffabschnitt (insbesondere eines Filmscharniers); und/oder
- Einbringen, insbesondere Prägen oder Tiefziehen, eines Vorsprungs in dem Betätigungselement, wobei der Vorsprung eine Nietöffnung aufweist; und/oder
- Biegen des Arretierabschnitts aus dem Blechelement, sodass dieser an einer Unterseite und/oder parallel zu einem anderen Bereich des Betätigungselements angeordnet ist, insbesondere unterseitig parallel zu einem Griffabschnitt, wobei vorzugsweise ein Randbereich des Griffabschnitts über den Arretierabschnitt gefalzt wird.

Das Verfahren weist vorzugsweise ferner die folgenden Schritte auf:
- Formen eines unterseitig vorstehenden Bereichs im Arretierabschnitt, insbesondere mittels Stanzen und Biegen;
- Anordnen des Betätigungselements oberseitig an dem Deckelspiegel derart, dass der vorstehende Bereich durch den Führungsschlitz ragt, wobei das Betätigungselement vorzugsweise in der Schließstellung angeordnet ist; und
- anschließendes Biegen eines Teilbereichs des vorstehenden Bereichs, insbesondere mittels eines Schiebers.

Diese drei Teilschritte erfolgen bevorzugt in der genannten Reihenfolge. Vorzugsweise erfolgt das Biegen in eine von der Ausgussöffnung abgewandte Richtung. Durch das Biegen kann beispielsweise ein Haken als Arretierelement gebildet werden. Vorzugsweise wird so gebogen, dass ein umgebogener Bereich in Vertikalrichtung der Dose gesehen mit dem Deckelspiegel überlappt.

Weiterhin kann das Verfahren das Einbringen einer Nut in dem Verschlusselement aufweisen. In die Nut kann eine Dichtung eingelegt, eingepresst, eingeklebt oder eingespritzt werden. Die Nut kann durch Klemmung mit einem äußeren Rand des Verschlusselements fixiert werden, insbesondere durch ein Umbiegen des äußeren Rands. Das Umbiegen kann auch durch ein Falzen erfolgen.

Ein vierter Aspekt betrifft ein Verfahren zum Herstellen einer Dose, insbesondere einer Dose gemäß dem zweiten Aspekt. Vorzugsweise weist das Verfahren die Schritte zum Herstellen eines Dosendeckels gemäß dem Verfahren nach dem dritten Aspekt auf. Das Verfahren gemäß dem vierten Aspekt weist wenigstens die folgenden Schritte auf:
- Bereitstellen eines Dosendeckels gemäß dem ersten Aspekt, wobei der Dosendeckel mit dem Verfahren gemäß dem dritten Aspekt hergestellt worden sein kann;
- Verbinden des Dosendeckels mit einem Dosenkörper, insbesondere durch Bördeln eines äußeren umlaufenden Rands des Deckelspiegels mit einer seitlichen Wand des Dosenkörpers.

Weitere Merkmale und Eigenschaften der Erfindung sind durch die folgende Gegenstandsliste definiert:
1. Dosendeckel für eine Dose, vorzugsweise ausgebildet als Getränkedose und/oder als Aufbewahrungsbehälter für Schüttgut, mit:
   wenigstens einem Deckelspiegel, welcher dazu ausgebildet ist, eine Oberseite der Dose zu begrenzen, vorzugsweise durch Bördeln eines äußeren umlaufenden Rands des Deckelspiegels mit einer seitlichen Wand der Dose, wobei der Deckelspiegel wenigstens eine Ausgussöffnung aufweist, durch welche ein in der Dose befindlicher Stoff ausgeschüttet werden kann;
   einem Betätigungselement, welches an einer Oberseite des Deckelspiegels, welche einem Innenraum der Dose bei daran angebrachtem Dosendeckel abgewandt ist, angeordnet ist; und
   einem Verschlusselement, welches an einer Unterseite des Deckelspiegels, welche einem Innenraum der Dose bei daran angebrachtem Dosendeckel zugewandt ist, angeordnet ist, wobei das Verschlusselement zwischen einer Schließstellung, in welcher das Verschlusselement die Ausgussöffnung fluiddicht und/oder gasdicht verschließt, und einer Offenstellung, in welcher die Ausgussöffnung wenigstens teilweise freigegeben ist, im Wesentlichen translatorisch entlang des Deckelspiegels geführt mittels des Betätigungselements verschiebbar ist;
   wobei das Verschlusselement und das Betätigungselement optional aus einem metallischen Werkstoff gebildet sind, vorzugsweise aus einem Aluminiumwerkstoff oder Weißblech, und
   wobei das Verschlusselement und das Betätigungselement mittels einer Verbindung, vorzugsweise einer Nietverbindung und/oder einer Schweißverbindung, aneinander befestigt sind, wobei sich die Verbindung bei Verschiebung des Verschlusselements aus der Schließstellung in die Offenstellung vorzugsweise entlang eines Führungsschlitzes in dem Deckelspiegel bewegt.
2. Dosendeckel nach Gegenstand 1,
   wobei die als Nietverbindung ausgebildete Verbindung durch einen in dem Verschlusselement oder dem Betätigungselement geformten Nietnippel gebildet ist, welcher in einer korrespondierenden Nietöffnung des anderen der beiden Elemente angeordnet ist.
3. Dosendeckel nach Gegenstand 2,
   wobei sich die Nietöffnung durch einen Vorsprung erstreckt, vorzugsweise durch einen in Richtung der Unterseite des Deckelspiegels vorspringenden Vorsprung des Betätigungselements.
4. Dosendeckel nach Gegenstand 3,
   wobei sich der Vorsprung in der Offenstellung und/oder in der Schließstellung zumindest teilweise durch den Führungsschlitz erstreckt.
5. Dosendeckel nach einem der vorhergehenden Gegenstände,
   wobei die Verbindung, insbesondere die Nietverbindung, zumindest in einem Bereich, der sich durch den Führungsschlitz erstreckt, schmäler als der Führungsschlitz ausgebildet ist.
6. Dosendeckel nach einem der vorhergehenden Gegenstände,
   wobei an der Verbindung in einem Bereich, der sich durch den Führungsschlitz erstreckt, mindestens eine ebene Fläche ausgebildet ist,
   wobei die mindestens eine ebene Fläche einem den Führungsschlitz begrenzenden Rand des Deckelspiegels zugewandt ist.
7. Dosendeckel nach einem der vorhergehenden Gegenstände,
   wobei der Dosendeckel wenigstens eine Dichtung aufweist, welche wenigstens in der Schließstellung des Verschlusselements zwischen dem Verschlusselement und dem Deckelspiegel angeordnet ist.
8. Dosendeckel nach Gegenstand 7,
   wobei die Dichtung zumindest teilweise in einer Nut aufgenommen ist, die auf einer Oberseite des Verschlusselements ausgebildet ist.
9. Dosendeckel nach Gegenstand 7 oder 8,
   wobei die Dichtung mittels eines Außenrands des Verschlusselements an dem Verschlusselement fixiert ist, wobei der Außenrand in die Dichtung und/oder über einen Abschnitt der Dichtung gebogen ist.
10. Dosendeckel nach Gegenstand 8 oder 9,
   wobei die Dichtung eine Hinterschneidung aufweist,
      und/oder
   ein Querschnitt des in der Nut aufgenommenen Teilbereichs der Dichtung kleiner ist als ein Querschnitt der Nut.
11. Dosendeckel nach einem der Gegenstände 7 bis 10,
   wobei die Dichtung einen runden, eckigen oder irregulären Querschnitt aufweist.
12. Dosendeckel nach einem der Gegenstände 7 bis 11,
   wobei die Dichtung zwei Dichtlippen aufweist, welche voneinander beabstandet wenigstens in der Schließstellung an dem Deckelspiegel anliegen.
13. Dosendeckel nach einem der vorhergehenden Gegenstände,
   wobei der Deckelspiegel und/oder das Verschlusselement eine Kerbe oder Prägung in einem Teilbereich aufweist, welcher einem Teilbereich der Ausgussöffnung, welcher bei dem Verstellen des Verschlusselements von der Schließstellung in die Offenstellung zuerst freigegeben wird, benachbart angeordnet ist oder diesen Teilbereich begrenzt.
14. Dosendeckel nach einem der vorhergehenden Gegenstände,
   wobei der Deckelspiegel ferner eine Druckausgleichöffnung aufweist, wobei die Querschnittfläche der Druckausgleichöffnung kleiner als die Querschnittfläche der Ausgussöffnung ist,
   wobei die Druckausgleichöffnung in der Schließstellung von dem Verschlusselement fluiddicht und/oder gasdicht verschlossen ist und in der Offenstellung wenigstens teilweise freigegeben ist,
   wobei die Druckausgleichöffnung derart angeordnet ist, dass diese beim Verstellen des Verschlusselements von der Schließstellung in die Offenstellung vor der Ausgussöffnung freigegeben wird.
15. Dosendeckel nach einem der vorhergehenden Gegenstände,
   wobei in der Offenstellung zwischen dem Verschlusselement und dem Deckelspiegel ein Luftkanal gebildet ist, dessen erstes Ende an der Oberseite des Deckelspiegels und/oder an einem dem äußeren Deckelspiegelrand abgewandten Endbereich der Ausgussöffnung mündet und dessen zweites Ende an einer Unterseite des Deckelspiegels an einem der Ausgussöffnung abgewandten Endbereich des Verschlusselements mündet.
16. Dosendeckel nach Gegenstand 15,
   wobei der Luftkanal in der Schließstellung und/oder in einer Zwischenstellung des Verschlusselements zwischen der Offenstellung und Schließstellung blockiert und/oder gegenüber dem Innenraum abgedichtet ist.
17. Dosendeckel nach Gegenstand 15 oder 16,
   wobei wenigstens ein Teilbereich des Luftkanals durch eine Vertiefung in dem Verschlusselement und/oder dem Deckelspiegel gebildet ist.
18. Dosendeckel nach einem der Gegenstände 15 bis 17,
   wobei das erste Ende des Luftkanals in der Offenstellung durch eine Lücke zwischen dem Verschlusselement und dem Betätigungselement und/oder zwischen der Dichtung und dem Betätigungselement gebildet ist,
   wobei in der Schließstellung vorzugsweise ein Teilbereich des Deckelspiegels in der Lücke angeordnet ist und dadurch den Luftfluss blockiert.
19. Dosendeckel nach einem der Gegenstände 15 bis 18,
   wobei das zweite Ende des Luftkanals in der Offenstellung durch eine Lücke zwischen dem Verschlusselement und dem Deckelspiegel und/oder zwischen der Dichtung und dem Deckelspiegel gebildet ist.
20. Dosendeckel nach Gegenstand 19,
   wobei das zweite Ende des Luftkanals in der Offenstellung dadurch gebildet wird, dass
   - der Deckelspiegel eine oder mehrere in Richtung der Oberseite vorstehende Prägungen oder Ausbauchungen aufweist, wobei die Prägungen oder Ausbauchungen in der Offenstellung des Verschlusselements einen Umströmungsweg für die Luft um das Verschlusselement bilden, wodurch die Dichtwirkung des Verschlusselements mit der Unterseite des Deckelspiegels im Bereich der einen oder mehreren Prägungen aufgehoben ist; und/oder
   - der Deckelspiegel ein oder mehrere in Richtung der Unterseite vorstehende Prägungen aufweist, die das Verschlusselement in der Offenstellung zumindest abschnittsweise nach unten auslenken, wodurch die Dichtwirkung des Verschlusselements mit der Unterseite des Deckelspiegels im ausgelenkten Bereich aufgehoben ist; und/oder
   - das Verschlusselement in der Offenstellung an einer radial äußeren Sicke des Deckelspiegels nach unten ausgelenkt wird, wodurch die Dichtwirkung des Verschlusselements mit der Unterseite des Deckelspiegels im ausgelenkten Bereich aufgehoben ist.
21. Dosendeckel nach einem der vorhergehenden Gegenstände,
   wobei der Führungsschlitz und die Ausgussöffnung eine gemeinsame Durchgangsöffnung in dem Deckelspiegel bilden.
22. Dosendeckel nach einem der vorhergehenden Gegenstände,
   wobei der Führungsschlitz länglich ausgebildet ist, wobei eine Längsrichtung des Führungsschlitzes einer Verschiebungsrichtung des Verschlusselements entspricht.
23. Dosendeckel nach einem der vorhergehenden Gegenstände,
   wobei das Betätigungselement an der Unterseite einen Mittenbereich und einen Außenbereich aufweist;
   wobei der Mittenbereich gegenüber dem Außenbereich zurückgesetzt ist;
   wobei das Verschlusselement sich über den Außenbereich an der Oberseite des Deckelspiegels abstützt, wodurch eine Oberseite des Verschlusselements und/oder eine Oberseite der Dichtung gegen die Unterseite des Deckelspiegels gepresst wird.
24. Dosendeckel nach einem der vorhergehenden Gegenstände,
   wobei der Führungsschlitz an seinem von der Ausgussöffnung abgewandten Ende wenigstens eine Entlastungskerbe aufweist.
25. Dosendeckel nach einem der vorhergehenden Gegenstände,
   wobei das Betätigungselement wenigstens einen Befestigungsabschnitt, in welchem die Verbindung mit dem Verschlusselement ausgebildet ist, und einen damit verbundenen Griffabschnitt, welcher zum Greifen Zwecks der Verstellung zwischen der Offenstellung und der Schließstellung ausgebildet ist, aufweist.
26. Dosendeckel nach dem vorhergehenden Gegenstand,
   wobei der Griffabschnitt zwischen einer Verstaustellung, in welcher der Griffabschnitt im Wesentlichen parallel zu dem Deckelspiegel und/oder dem Befestigungsabschnitt angeordnet ist, und einer Betätigungsstellung, in welcher der Griffabschnitt für das Verstellen zwischen der Offenstellung und der Schließstellung greifbar ist, schwenkbar ist.
27. Dosendeckel nach Gegenstand 26,
   wobei der Befestigungsabschnitt und der Griffabschnitt mittels eines Gelenks verbunden sind, insbesondere mittels eines Filmscharniers, dessen Gelenkachse sich vorzugsweise quer, bevorzugt orthogonal zu einer Längsachse des Führungsschlitzes erstreckt;
   wobei der Griffabschnitt dazu ausgebildet ist, zum Verstellen zwischen der Verstaustellung und der Betätigungsstellung relativ zu dem Befestigungsabschnitt um die Gelenkachse geschwenkt zu werden.
28. Dosendeckel nach einem der Gegenstände 25 bis 27,
   wobei der Griffabschnitt eine Ausgangsstellung hat, welche vorzugsweise der Verstaustellung entspricht;
   wobei das Betätigungselement so ausgebildet ist, dass sich der Griffabschnitt nach einem erstmaligen Verstellen aus der Ausgangsstellung nicht mehr bleibend in die Ausgangsstellung rückverstellen lässt;
      und/oder
   wobei das Betätigungselement so ausgebildet ist, dass es sich bei einem erstmaligen Verstellen des Griffabschnitts aus der Ausgangsstellung plastisch verformt, insbesondere dauerhaft und/oder bleibend optisch erkennbar.
29. Dosendeckel nach einem der vorhergehenden Gegenstände,
   wobei ein äußerer Rand des Betätigungselements gerundet ist, vorzugsweise gefalzt.
30. Dosendeckel nach einem der vorhergehenden Gegenstände,
   wobei das Betätigungselement einen Arretierabschnitt aufweist, mittels welchem das Betätigungselement vor einem erstmaligen Verstellen aus der Schließstellung in die Offenstellung an dem Deckelspiegel in der Schließstellung arretiert ist.
31. Dosendeckel nach dem vorhergehenden Gegenstand,
   wobei der Arretierabschnitt ein von der Unterseite des Betätigungselements nach unten vorstehendes Arretierelement aufweist.
32. Dosendeckel nach dem vorhergehenden Gegenstand,
   wobei das Arretierelement als Haken ausgebildet ist.
33. Dosendeckel nach einem der beiden vorhergehenden Gegenstände,
   wobei das Arretierelement vor einem erstmaligen Verstellen aus der Schließstellung in die Offenstellung im Führungsschlitz angeordnet ist, vorzugsweise an einem von der Ausgussöffnung abgewandten Endbereich des Führungsschlitzes, und dort mit dem Deckelspiegel eingreift.
34. Dosendeckel nach einem der drei vorhergehenden Gegenstände,
   wobei das Arretierelement vor einem erstmaligen Verstellen des Betätigungselements aus der Schließstellung in die Offenstellung in einer Vertiefung des Verschlusselements angeordnet ist.
35. Dosendeckel nach Gegenstand 30 bis 34,
   wobei der Arretierabschnitt formschlüssig ein Bewegen des Betätigungselements aus der Schließstellung in die Offenstellung verhindert,
   wobei insbesondere ein Verstellen des Griffabschnitts aus der Verstaustellung ein Lösen der Arretierung bewirkt, insbesondere ein dauerhaftes Lösen, bevorzugt durch ein Verformen des Arretierelements des Arretierabschnitts.
36. Dosendeckel nach einem der Gegenstände 30 bis 35,
   wobei der Arretierabschnitt an einer Unterseite des Griffabschnitts angeordnet ist.
37. Dosendeckel nach einem der Gegenstände 30 bis 36,
   wobei der Arretierabschnitt und der Griffabschnitt durch zwei unterschiedliche Materiallagen gebildet sind.
38. Dosendeckel nach Gegenstand 37,
   wobei die zwei Materiallagen einstückig ausgebildet sind, wobei ein Teilbereich eines Rands des Griffabschnitts einen Übergang zwischen dem Arretierabschnitt und dem Griffabschnitt bildet;
   wobei bevorzugt dieser Übergang gegenüber dem übrigen Griffabschnitt eine geringere Gesamtdicke hat, um ein Untergreifen zum Schwenken des Griffabschnitts aus der Verstaustellung zu erleichtern.
39. Dosendeckel nach einem der Gegenstände 30 bis 38,
   wobei der Arretierabschnitt durch einen umgefalzten Rand des Griffabschnitts am Griffabschnitt fixiert ist.
40. Dosendeckel nach einem der vorhergehenden Gegenstände,
   wobei das Betätigungselement einstückig ausgebildet ist.
41. Dosendeckel nach einem der Gegenstände 27 bis 40,
   wobei das Verschlusselement wenigstens einen Stützabschnitt aufweist;
   wobei der Stützabschnitt an der Unterseite des Deckelspiegels in wenigstens einem Bereich anliegt, welcher der Position des Gelenks zwischen dem Griffabschnitt und dem Betätigungsabschnitt entspricht.
42. Dose, vorzugsweise ausgebildet als Getränkedose und/oder als Aufbewahrungsbehälter für Schüttgut, aufweisend wenigstens einen Dosendeckel nach einem der vorgehenden Gegenstände.
43. Verfahren zum Herstellen eines Dosendeckels für eine Dose, vorzugsweise ausgebildet als Getränkedose und/oder als Aufbewahrungsbehälter für Schüttgut, vorzugsweise eines Dosendeckels nach einem der Gegenstände 1 bis 41, gekennzeichnet durch folgende Schritte:
   - Bereitstellen eines Deckelspiegels, welcher dazu ausgebildet ist, eine Oberseite der Dose zu begrenzen, insbesondere durch Bördeln eines äußeren umlaufenden Rands des Deckelspiegels mit einer seitlichen Wand der Dose, wobei der Deckelspiegel wenigstens eine Ausgussöffnung, durch welche ein in der Dose befindlicher Stoff ausgeschüttet werden kann, und einen Führungsschlitz aufweist;
   - Bereitstellen eines Betätigungselements und eines Verschlusselements gebildet aus einem metallischen Werkstoff, vorzugsweise aus einem Aluminiumwerkstoff oder Weißblech;
   - Anordnen des Verschlusselements an einer Unterseite des Deckelspiegels, welche einem Innenraum der Dose bei daran angebrachtem Dosendeckel zugewandt ist;
   - Anordnen des Betätigungselements an einer Oberseite des Deckelspiegels, welche einem Innenraum der Dose bei daran angebrachtem Dosendeckel abgewandt ist;
   - Befestigen des Verschlusselements und des Betätigungselements mittels einer Verbindung, insbesondere einer Nietverbindung oder Schweißverbindung, miteinander, wobei die Nietverbindung entlang des Führungsschlitzes bewegbar ist;

   wobei das Verschlusselement mittels des Betätigungselements zwischen einer Schließstellung, in welcher das Verschlusselement die Ausgussöffnung fluiddicht und/oder gasdicht verschließt, und einer Offenstellung, in welcher das Verschlusselement die Ausgussöffnung wenigstens teilweise freigibt, im Wesentlichen translatorisch entlang des Dosenspiegels geführt verschiebbar ist,
   wobei das Betätigungselement vorzugsweise einen Arretierabschnitt aufweist, mittels welchem das Betätigungselement vor einem erstmaligen Verstellen aus einer Schließstellung in die Offenstellung in der Schließstellung an dem Deckelspiegel arretiert ist.
44. Verfahren nach Gegenstand 43,
   wobei das Bereitstellen des Deckelspiegels den folgenden Schritt aufweist:
      - Einbringen, insbesondere Stanzen oder Ausschneiden, der Ausgussöffnung und/oder des Führungsschlitzes, insbesondere als gemeinsame Durchgangsöffnung;
   sowie optional einen oder mehrere der folgenden Schritte:
      - Einbringen von Prägungen, die in der Offenstellung ein Freigeben eines Luftkanals des Verschlusselements bewirken; und/oder
      - Einbringen, insbesondere Stanzen oder Ausschneiden, einer zusätzlichen Druckausgleichöffnung, welche von der Ausgussöffnung beabstandet ist und beim Verstellen von der Schließstellung in die Offenstellung zuerst freigegeben wird; und/oder
      - Einbringen, insbesondere Stanzen oder Ausschneiden, einer Kerbe oder Prägung in einem Teilbereich, welcher einem Teilbereich der Ausgussöffnung, der beim Verstellen des Verschlusselements von der Schließstellung in die Offenstellung zuerst freigegeben wird, benachbart angeordnet ist und/oder diesen Teilbereich begrenzt; und
      - Einbringen, insbesondere Stanzen oder Ausschneiden, einer Entlastungskerbe an einem von der Ausgussöffnung abgewandten Ende des Führungsschlitzes.
45. Verfahren nach Gegenstand 43 oder 44,
   wobei das Bereitstellen des Betätigungselements einen oder mehrere der folgenden Schritte aufweist:
   - Formen des Betätigungselements aus einem einzelnen Blechelement; und/oder
   - Einbringen eines Gelenks zwischen einem Befestigungsabschnitt und einem Griffabschnitt; und/oder
   - Einbringen, insbesondere Prägen oder Tiefziehen, eines Vorsprungs in dem Betätigungselement, wobei der Vorsprung eine Nietöffnung aufweist; und/oder
   - Biegen des Arretierabschnitts aus dem Blechelement, sodass dieser an einer Unterseite und/oder parallel zu einem anderen Bereich des Betätigungselements angeordnet ist, insbesondere unterseitig parallel zu einem Griffabschnitt, wobei insbesondere ein Randbereich des Griffabschnitts über den Arretierabschnitt gefalzt wird.
46. Verfahren nach einem der Gegenstände 43 bis 45, ferner die folgenden Schritte aufweisend:
   - Formen eines unterseitig vorstehenden Bereichs im Arretierabschnitt, insbesondere mittels Stanzen und Biegen;
   - Anordnen des Betätigungselements oberseitig an dem Deckelspiegel derart, dass der vorstehende Bereich durch den Führungsschlitz ragt, wobei das Betätigungselement vorzugsweise in der Schließstellung angeordnet ist; und
   - anschließendes Biegen eines Teilbereichs des vorstehenden Bereichs, insbesondere mittels eines Schiebers, um vorzugsweise einen Haken zu formen.
47. Verfahren zum Herstellen einer Dose, insbesondere einer Dose nach Gegenstand 42, vorzugsweise auch aufweisend die Schritte zum Herstellen eines Dosendeckels gemäß dem Verfahren nach einem der Gegenstände 43 bis 46, wenigstens die folgenden Schritte aufweisend:
   - Bereitstellen eines Dosendeckels nach einem der Gegenstände 1 bis 41;
   - Verbinden des Dosendeckels mit einem Dosenkörper, insbesondere durch Bördeln eines äußeren umlaufenden Rands des Deckelspiegels mit einer seitlichen Wand des Dosenkörpers.

Weitere Vorteile, Merkmale und Einzelheiten der Erfindung ergeben sich aus der nachfolgenden Beschreibung bevorzugter Ausführungsbeispiele sowie anhand der Zeichnungen. Die vorstehend in der Beschreibung genannten Merkmale und Merkmalskombination sowie die nachfolgend in der Figurenbeschreibung genannten und/oder in den Figuren alleine gezeigten Merkmale und Merkmalskombination sind nicht nur in der jeweils angegebenen Kombination, sondern auch in anderen Kombination oder in Alleinstellung verwendbar, ohne den Rahmen der Erfindung zu verlassen. Jeweilige Merkmale und Merkmalskombinationen eines Aspekts stellen auch jeweilige Merkmale und Merkmalskombinationen anderer Aspekte dar. Die Figuren sollen den Schutzumfang der Ansprüche nicht beschränken.

Dabei zeigen:
- Fig. 1: in einer schematischen oberseitigen Perspektivansicht einen Dosendeckel in seiner Schließstellung;
- Fig. 2: in einer schematischen oberseitigen Perspektivansicht den Dosendeckel gemäß Fig. 1 mit einem von einer Ausgangsstellung angehobenen Griffabschnitt eines Betätigungselements des Dosendeckels;
- Fig. 3: in einer schematischen Seitenansicht den Dosendeckel gemäß Fig. 1 ohne Deckelspiegel, wobei der Griffabschnitt in der Stellung gemäß Fig. 2 gezeigt ist;
- Fig. 4: in einer schematischen oberseitigen Perspektivansicht den Dosendeckel gemäß Fig. 1 mit dem Griffabschnitt in seiner Betätigungsstellung;
- Fig. 5: in einer schematischen Seitenansicht den Dosendeckel gemäß Fig. 1 ohne Deckelspiegel, wobei der Griffabschnitt in der Stellung gemäß Fig. 4 gezeigt ist;
- Fig. 6: in einer schematischen Draufsicht den Dosendeckel gemäß Fig. 1, wobei der Griffabschnitt in der Stellung gemäß Fig. 4 gezeigt ist;
- Fig. 7: in einer schematischen Draufsicht den Dosendeckel gemäß Fig. 1 in seiner Offenstellung;
- Fig. 8A: in einer schematischen Draufsicht einen Deckelspiegel für den Dosendeckel gemäß Fig. 1;
- Fig. 8B: in einer schematischen Draufsicht eine Variante des Deckelspiegels von Fig. 8A;
- Fig. 8C: in einer schematischen Draufsicht eine weitere Variante des Deckelspiegels von Fig. 8A;
- Fig. 9: in einer schematischen Unteransicht einen Dosendeckel gemäß Fig. 1 in seiner Schließstellung;
- Fig. 10: in einer schematischen Draufsicht eine weitere Ausführungsform des Dosendeckels in seiner Schließstellung;
- Fig. 11: in einer schematischen Seitenansicht den Dosendeckel gemäß Fig. 10;
- Fig. 12: in einer schematischen seitlichen Schnittansicht den Dosendeckel gemäß Fig. 10, geschnitten entlang Linie B-B;
- Fig. 13: in einer schematischen seitlichen Schnittansicht den Dosendeckel gemäß Fig. 10, geschnitten entlang Linie C-C;
- Fig. 14: in einer schematischen seitlichen Schnittansicht den Dosendeckel gemäß Fig. 10, geschnitten entlang Linie A-A;
- Fig. 15: in einer schematischen Schnittansicht eine mögliche Gestaltung einer Dichtung des Dosendeckels gemäß Fig. 1 und Fig. 10;
- Fig. 16: eine schematische Explosionsdarstellung eines Verschlusselements;
- Fig. 17: einen weitere Gestaltung eines Deckels zur Verwendung mit dem Verschlusssystem;
- Fig. 18: einen weitere Gestaltung eines Deckels zur Verwendung mit dem Verschlusssystem; und
- Fig. 19: eine weitere Gestaltung eines Verschlusselements.

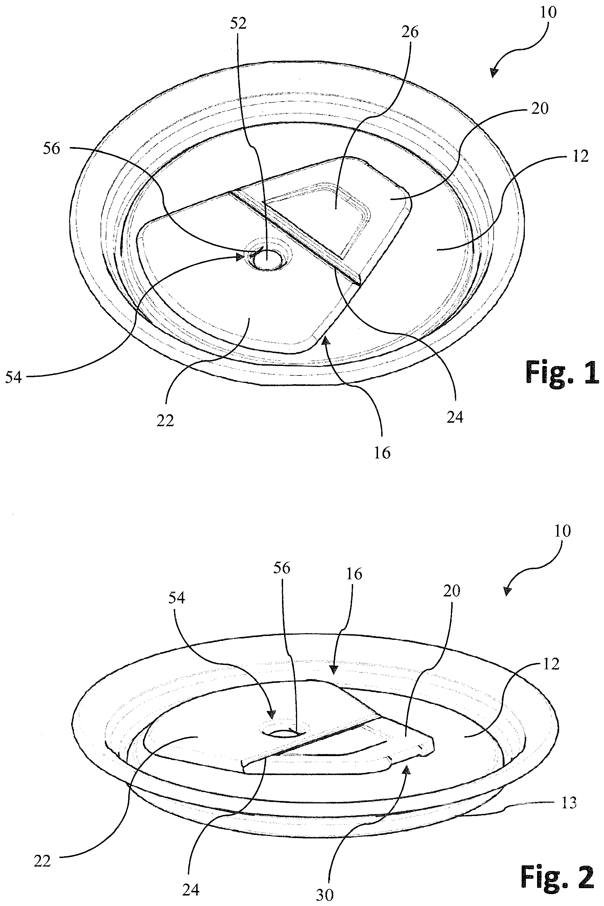

Fig. 1 zeigt in einer schematischen Perspektivansicht einen wiederverschließbaren Dosendeckel 10 für eine Dose, beispielsweise eine Getränkedose, von oben. Der Dosendeckel weist einen Deckelspiegel 12 auf, welcher bei Befestigung an einem Dosenkörper diesen oberseitig abschließt. Eine Hochrichtung des Dosendeckels 10 kann durch eine stehende Dose definiert sein. Die Oberseite jeweiliger Teile des Dosendeckels sind bezüglich einer einem Innenraum der Dose abgewandten Seite definiert. Jeweilige Unterseiten sind dem Innenraum zugewandt. Die Begriffe "oben" und "unten" bzw. "Oberseite" und "Unterseite" beziehen sich auf die übliche Anordnung des Deckels an einer Dose. Selbstverständlich können die erfindungsgemäßen Dosendeckel jedoch bei Bedarf auch anders ausgerichtet bzw. an einer Dose angebracht werden.

Der Dosendeckel 10 ist ein runder flacher Körper und weist radial außenseitig eine umlaufende Sicke 13 (siehe z.B. Fig. 2) zur Verstärkung auf. An seinem äußeren umlaufenden Rand kann der Deckelspiegel 12 mit dem Dosenkörper zur Verbindung und damit Herstellung der abgeschlossenen Dose gebördelt werden. Der Deckelspiegel 12 kann äußere Abmaße und Materialien aufweisen, welche einem herkömmlichen Deckelspiegel für Getränkedosen entspricht. Vorliegend ist der Deckelspiegel 12 beispielsweise aus einem metallischen Werkstoff wie Weißblech oder Aluminiumblech gebildet und wurde in einem Tiefzieh- und/oder Stanzprozess hergestellt. An seiner Oberseite und seiner Unterseite ist der Deckelspiegel 12 zusätzlich mit Kunststoff beschichtet.

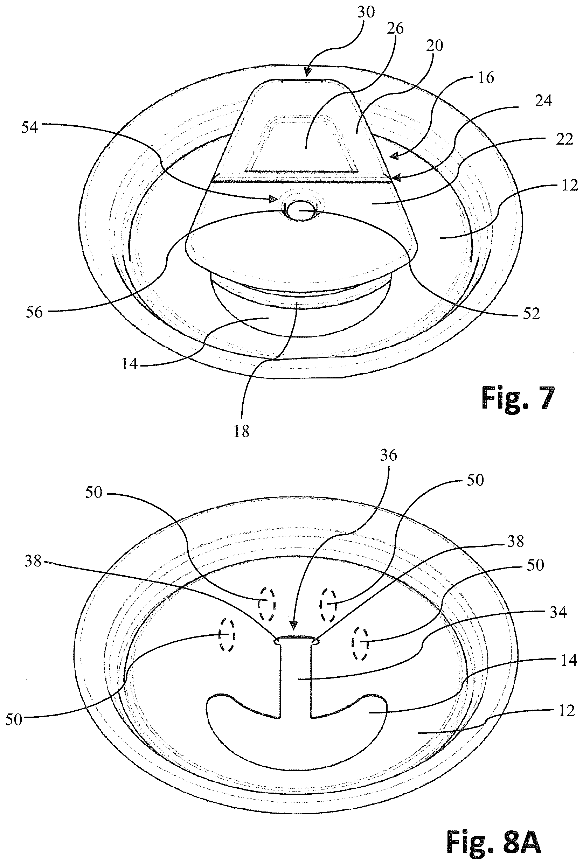

Der Deckelspiegel 12 weist zudem eine Ausgussöffnung 14 auf, welche beispielsweise in Fig. 7 zu erkennen ist. Die Ausgussöffnung 14 ist wenigstens teilweise oval ausgebildet. Durch die Ausgussöffnung kann bei geöffnetem Dosendeckel 10 ein Inhalt der Dose, wie ein Getränk, ausgeschüttet werden.

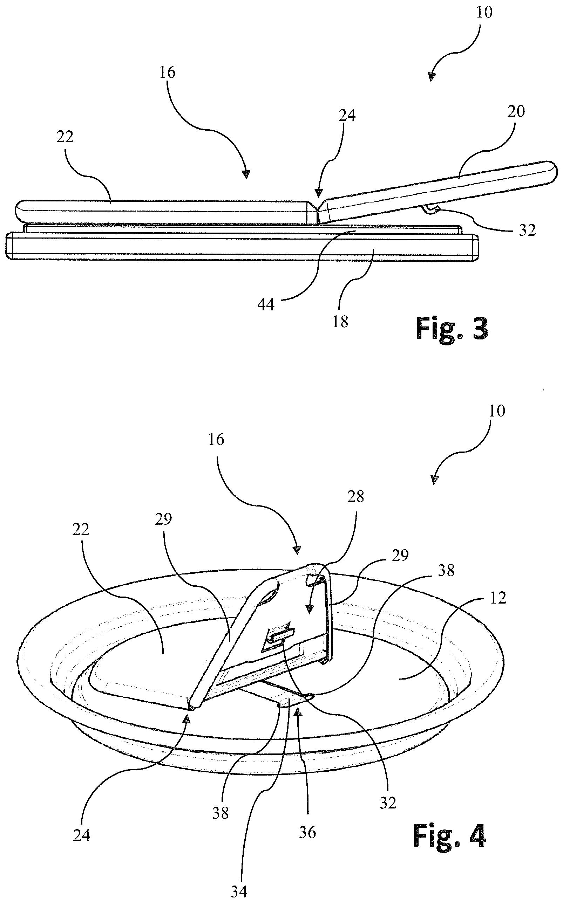

Weiterhin weist der Dosendeckel 10 ein Betätigungselement 16 auf, welches oberseitig an dem Deckelspiegel 12 angeordnet ist. Der Dosendeckel 10 weist ein Verschlusselement 18 auf, welches unterseitig an dem Deckelspiegel 12 angeordnet ist. Das Verschlusselement 18 ist beispielsweise in Fig. 3 zu erkennen. Das Verschlusselement 18 ist translatorisch und im Wesentlichen frei von einer Rotation zwischen einer Schließstellung und einer Offenstellung bewegbar, wobei diese Stellungen zu einem geschlossenen bzw. geöffneten Dosendeckel 10 korrespondieren. In seiner Schließstellung verschließt das Verschlusselement 18 die Ausgussöffnung 14 gas- und flüssigkeitsdicht. Insbesondere deckt das Verschlusselement 18 die Ausgussöffnung 14 in der Schließstellung ab und dichtet diese so von innen gegenüber dem Innenraum der Dose ab. In seiner Offenstellung gibt das Verschlusselement 18 die Ausgussöffnung 14 wenigstens teilweise frei.

Vorliegend ist das Betätigungselement 16 und das Verschlusselement 18 aus einem metallischen Werkstoff gebildet. Beispielsweise kann das Betätigungselement 16 und das Verschlusselement 18 aus dem gleichen Werkstoff wie der Deckelspiegel 12 gebildet sein. Vorzugsweise weisen das Betätigungselement 16 und das Verschlusselement 18 ebenfalls eine Kunststoffbeschichtung an ihren Oberseiten und Unterseiten auf. Alternativ kann das Verschlusselement 18 und/oder das Betätigungselement 16 aus Kunststoff ausgebildet sein, z.B. durch Spritzguss.

Das Betätigungselement 16 ist mit dem Verschlusselement 18 verbunden. Durch eine Bewegung des Betätigungselements 16 kann das Verschlusselement 18 deshalb zwischen der Schließstellung und der Offenstellung bewegt werden, insbesondere geführt. Eine Führungsart wird im Folgenden noch beispielhaft beschrieben. Bevorzugt ist die Verbindung als Nietverbindung ausgebildet, welche hier gezeigt ist und im Folgenden noch detailliert beschrieben wird. Alternativ kann die Verbindung beispielsweise eine Schweißverbindung sein.

Das Betätigungselement 16 weist einen Griffabschnitt 20 und einen Befestigungsabschnitt 22 auf. Das Betätigungselement 16 ist einstückig aus einem Blech geformt. Der Griffabschnitt 20 und der Befestigungsabschnitt 22 sind über ein Filmscharnier 24 als Gelenk verbunden. Das Filmscharnier 24 erlaubt eine Rotation des Griffabschnitts 20 relativ zu dem Befestigungsabschnitt 22 um dessen Längsachse. Vorliegend ist das Filmscharnier 24 durch eine lokale Schwächung in dem Betätigungselement gebildet, beispielsweise durch eine Kerbe.

In Fig. 2 ist in einer schematischen Perspektivansicht gezeigt, wie der Griffabschnitt 20 teilweise aus seiner Ausgangsstellung, gezeigt in Fig. 1, relativ zu dem Befestigungsabschnitt 22 nach oben rotiert wurde. Der Griffabschnitt 20 weist an seinem dem Befestigungsabschnitt 22 abgewandten Ende einen Bereich 30 mit geringerer Dicke auf. Dadurch kann der Griffabschnitt 20 besonders leicht von seiner Ausgangsstellung angehoben werden, beispielsweise mit einem Fingernagel. In der Ausgangsstellung (Fig. 1) erstreckt sich der Griffabschnitt im Wesentlichen parallel zu dem Deckelspiegel 12 und liegt an diesem im Wesentlichen flach an.

Fig. 4 veranschaulicht in einer schematischen Perspektivansicht eine Betätigungsstellung des Griffabschnitts 20. In dieser Stellung ist der Griffabschnitt 20 weit nach oben rotiert, beispielsweise mindestens 60° oder mindestens 80° gegenüber einer durch den Befestigungsabschnitt 22 und/oder den Deckelspiegel definierten Ebene. Dadurch kann der Griffabschnitt 20 besonders einfach zum Verschieben des Verschlusselements 18 gegriffen werden, beispielsweise mit zwei Fingern. An seiner Oberseite weist der Griffabschnitt 20 zudem eine Vertiefung 26 auf (siehe Fig. 1), welche einem Finger (insbesondere dem Daumen) beim Verstellen zusätzlichen Halt bieten kann.

Unterseitig weist das Betätigungselement 16 einen Arretierabschnitt 28 auf. Dieser Arretierabschnitt ist ebenfalls einstückig mit dem restlichen Betätigungselement 16 aus einem Blech geformt. Beispielsweise kann das Blech im Bereich 30 umgebogen (insbesondere gefalzt) werden, um eine zweite Materiallage am Betätigungselement 16 zu bilden. Die zweite Materiallage, welche den Arretierabschnitt 28 bildet, kann auch als Teil des Griffabschnitts 20 angesehen werden. Die zwei Materiallagen können den Griffabschnitt 20 verstärken, sodass höhere Betätigungskräfte ohne eine Beschädigung möglich sind. Durch das Umbiegen kann gleichzeitig der dünne Randbereich 30 in einem einzigen Fertigungsschritt kostengünstig geformt werden. Der Arretierabschnitt 28 ist durch einen gerundeten Rand des Griffabschnitts 20 in weiteren Teilbereichen 29 gehalten, wodurch zudem eine scharfe Außenkante vermieden wird.

Der Arretierabschnitt 28 weist ein Arretierelement 32 auf, welches unterseitig vorsteht. Vorliegend ist das Arretierelement 32 als Haken ausgebildet, was besonders gut in der Seitenansicht von Fig. 3 zu erkennen ist. Das Arretierelement 32 erstreckt sich in der Ausgangsstellung in eine korrespondierende Vertiefung 34 des Verschlusselements 18, wodurch der Griffabschnitt 20 flach anliegen kann und der Haken den Deckelspiegel 12 hintergreifen kann. Der Griffabschnitt 20 ist so in der Ausgangsstellung arretiert.

Beim Anheben des Griffabschnitts 20 kann sich das Arretierelement 32 plastisch verformen und so von dem Deckelspiegel 12 lösen. Dadurch kann ein Originalitätsmerkmal bereitgestellt werden, womit ein erstmaliges Öffnen der Dose kenntlich gemacht werden kann. Nach erstmaligen Anheben kann die plastische Verformung ein erneutes Arretieren verhindern. Das Lösen des Arretierelements 32 kann ein Geräusch verursachen, welches für den Benutzer zudem als Signal wahrnehmbar ist. Das Arretierelement 32 kann sich in einer anderen Ausführungsform beim erstmaligen Öffnen der Dose lediglich im Wesentlichen elastisch verformen. Dadurch kann das Arretierelement 32 beim Rückverstellen des Griffabschnitts 20 erneut an dem Deckelspiegel arretieren, beispielsweise nach Art eines Einrastens und/oder einer Schnappverbindung. Damit kann eine Transportsicherung auch nach erstmaligem Öffnen bereitgestellt werden. Diese erneute Arretierung kann ebenfalls ein Geräusch verursachen, welches dem Benutzer die erneute Arretierung signalisiert.

In der gezeigten Ausführungsform ist das Betätigungselement 16 vorzugsweise so ausgebildet, dass es sich nach einem erstmaligen Bewegen des Griffabschnitts 20 aus seiner Ausgangsstellung verformt. Dies kann ein Rückverstellen des Griffabschnitts 20 in die Ausgangsstellung verhindern und/oder ein erstmaliges Öffnen kenntlich machen. Beispielsweise kann sich das Filmscharnier 24 so verformen und/oder an einem äußeren Rand einreißen, dass der Griffabschnitt 20 nicht mehr in der Ausgangsstellung verbleibt und/oder die Verformung und/oder der Riss für einen Benutzer erkennbar ist. Beispielsweise kann der Griffabschnitt nur noch in eine Zwischenstellung, wie in Fig. 2 und 3 gezeigt, nach erstmaligem Öffnen zurückkehren. Vorteilhafterweise wird ein Rückverbiegen des Griffabschnitts 20 zudem dadurch verhindert, dass eine Rotation nach unten über den Deckelspiegel 12 hinaus notwendig wäre, um die plastische Verformung rückgängig zu machen, aber durch den Deckelspiegel 12 aufgrund der Befestigung des Betätigungselements 16 daran blockiert wird. Vorzugsweise erstreckt sich der Arretierabschnitt 28 nicht bis zum Filmscharnier 24. Dies kann eine entsprechende Verformung als Originalitätsmerkmal begünstigen. Die Ausgangsstellung kann vor einem erstmaligen Öffnen einer Verstaustellung des Griffabschnitts 20 entsprechen.

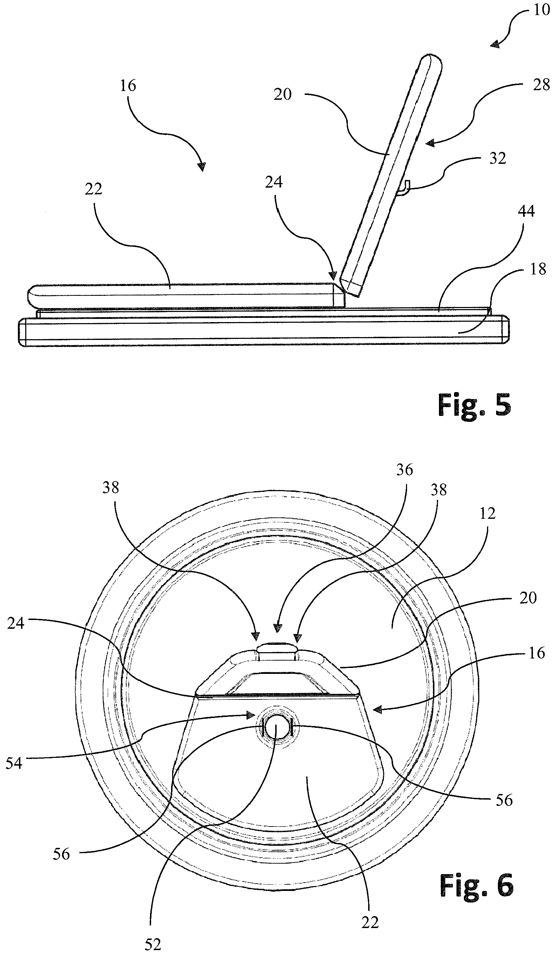

Fig. 5 veranschaulicht in einer schematischen Seitenansicht nochmals den Griffabschnitt 20 in seiner Betätigungsstellung, wobei wie bei Fig. 3 der Deckelspiegel 12 nicht gezeigt ist. Fig. 6 zeigt den Dosendeckel 10 in einer schematischen Draufsicht, wobei der Griffabschnitt 20 in der Betätigungsstellung gezeigt ist aber der Dosendeckel 10 und damit auch das Betätigungselement 16 und das Verschlusselement 18 (in Fig. 6 nicht sichtbar) noch in der Schließstellung sind. In Fig. 7 ist dagegen der Dosendeckel 10 und damit auch das Betätigungselement 16 und das Verschlusselement 18 in der Offenstellung angeordnet. Zu diesem Zweck wurde das Betätigungselement 16 und damit auch das Verschlusselement 18 in der Bildebene von Fig. 6 und 7 nach oben gezogen und/oder geschoben. Zum Wiederverschließen kann umgekehrt das Betätigungselement 16 und damit auch das Verschlusselement 18 in der Bildebene von Fig. 6 und 7 nach unten gezogen und/oder geschoben werden.

Fig. 8A veranschaulicht in einer schematischen Draufsicht den Deckelspiegel 12, welcher dort ohne Betätigungselement 16 und Verschlusselement 18 gezeigt ist. Der Deckelspiegel 12 weist einen zusätzlichen Durchgangsbereich zu der Ausgussöffnung 14 in Form eines länglichen Führungsschlitzes 34 auf. In dem Führungsschlitz 34 ist die Verbindung zwischen dem Betätigungselement 16 und dem Verschlusselement 18 angeordnet und so die Verschiebung des Verschlusselements 18 zwischen der Schließstellung und der Offenstellung geführt. In dem Führungsschlitz 34 ist vor dem erstmaligen Öffnen der Dose zudem auch das Arretierelement 32 angeordnet.

In der gezeigten Ausführungsform sind die Ausgussöffnung 14 und der Führungsschlitz 34 als gemeinsame Durchgangsöffnung in dem Deckelspiegel 12 gebildet. Dadurch können diese kostengünstig gemeinsam gefertigt werden, beispielsweise in einem Stanzprozess. An seinem der Ausgussöffnung 14 abgewandten Endbereich 36 weist der Dosendeckel 12 zwei Entlastungskerben 38 auf, welche sich im Wesentlichen quer zur Längserstreckung des Führungsschlitzes 34 erstrecken. Dadurch sind die Ecken im Endbereich 36 des Führungsschlitzes 34 gerundet ausgebildet, was einem Einreißen aufgrund eines Innendrucks in der Dose entgegenwirkt.

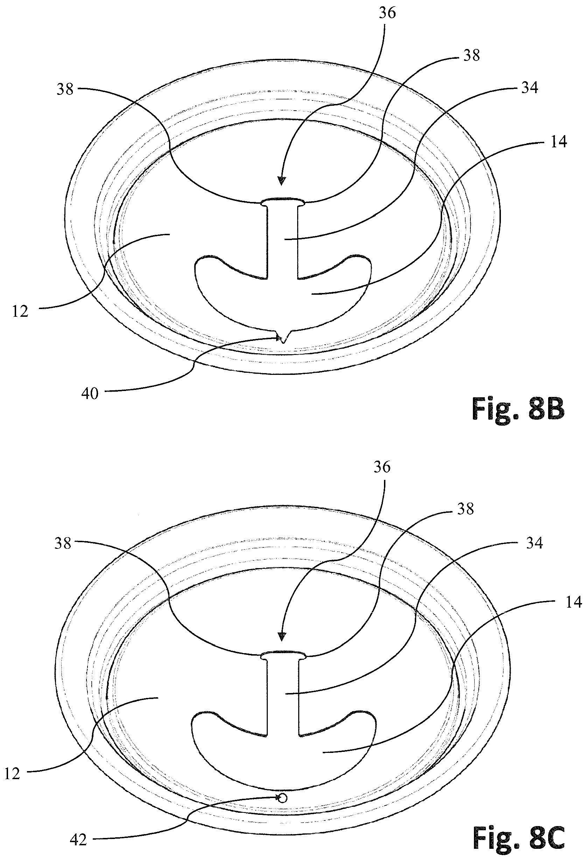

Der Deckelspiegel 12 kann zudem eine Gestaltung aufweisen, welche einen Druckausgleich beim Öffnen der Dose bewirken kann. Beispielsweise kann, wie in Fig. 8B gezeigt, optional an einem der Bewegungsrichtung des Betätigungselements 16 von der Schließstellung in die Offenstellung abgewandten Bereich benachbart zu der Ausgussöffnung 14 eine Kerbe 40 angeordnet sein. Diese Kerbe kann vor dem eigentlichen Freigeben der Ausgussöffnung 14 einen dünnen Kanal zwischen dem Innenraum und dem äußeren der Dose bilden. Durch einen Überdruck in dem Doseninneren kann so ein deutliches Zischgeräusch entstehen, welches dem Benutzer diesen Überdruck und damit die Frische des Getränks signalisiert.

Alternativ zu einer Kerbe kann, wie in Fig. 8C gezeigt, optional auch eine zusätzliche Durchgangsöffnung 42 mit einem geringen Durchmesser in diesem Bereich angeordnet sein, um ebenfalls einen Kanal mit geringem Querschnitt vor dem eigentlichen Freigeben der Ausgussöffnung 14 beim Öffnen freizugeben. Die Durchgangsöffnung 42 kann auch als Druckausgleichöffnung bezeichnet werden. Auch hiermit kann akustisch der Überdruck und damit die Frische des Doseninhalts einem Benutzer signalisiert werden.

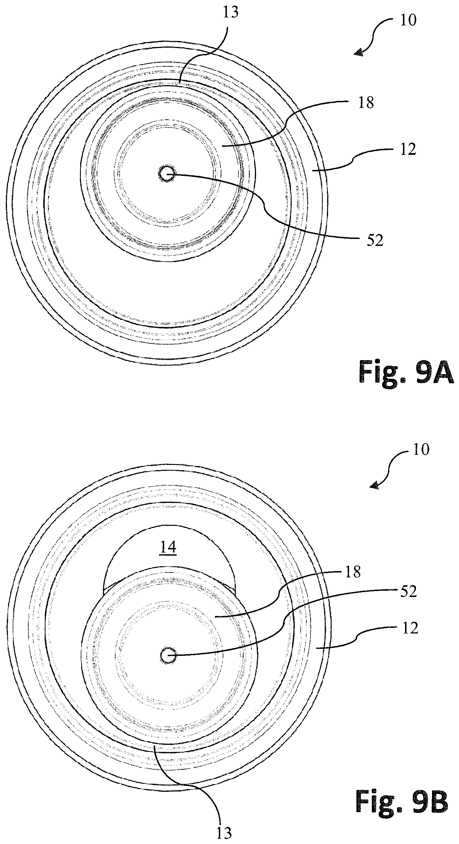

In Fig. 9A ist der Dosendeckel 10 mit dem Verschlusselement 18 in der Schließstellung in einer Unteransicht dargestellt. Das Verschlusselement 18 deckt die Ausgussöffnung 14 ab. In Fig. 9B ist das Verschlusselement 18 in der Offenstellung dargestellt. Die Ausgussöffnung 14 ist größtenteils freigegeben. Insbesondere wird die Ausgussöffnung 14 so freigegeben, dass unmittelbar ein Trinkhalm (nicht gezeigt) durch die Ausgussöffnung 14 in die Dose geführt werden kann.

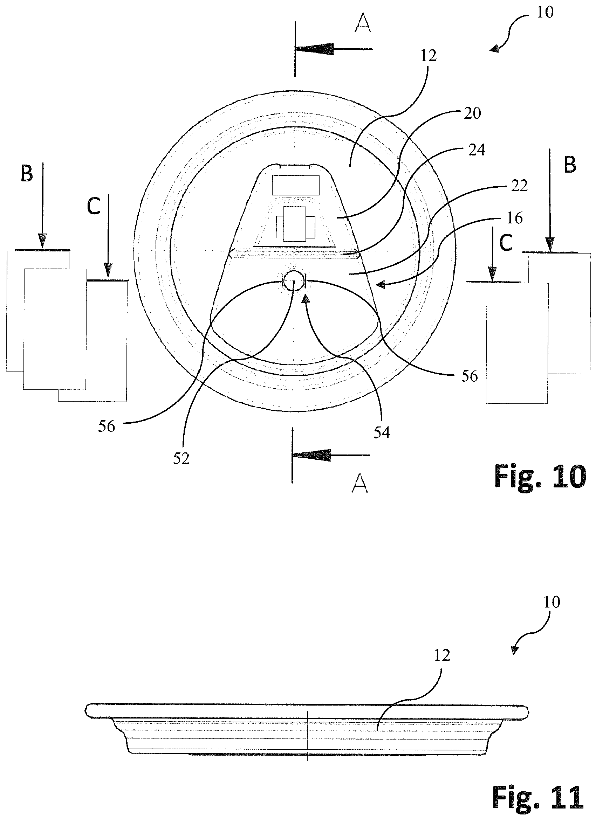

Fig. 10 veranschaulicht in einer weiteren Draufsicht den Dosendeckel 10.

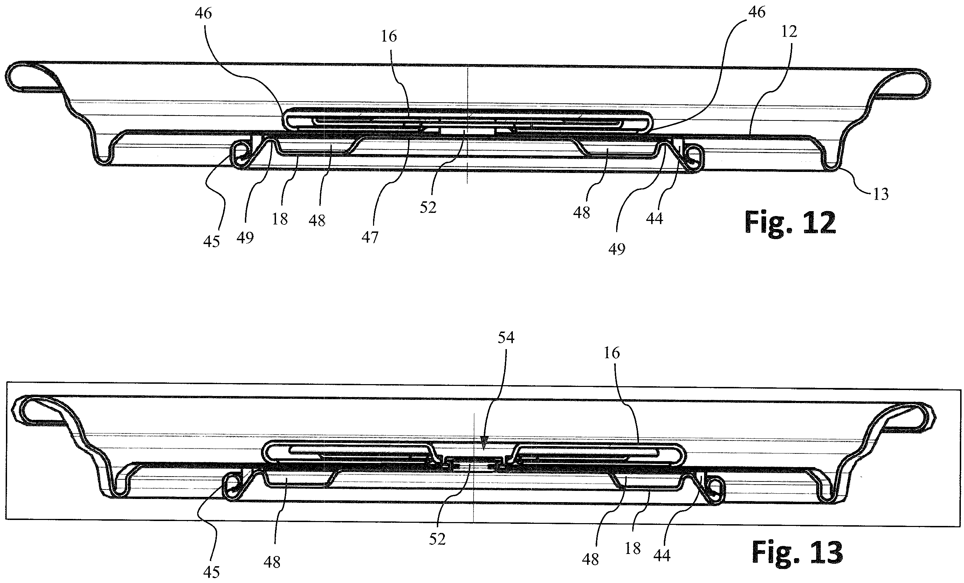

Fig. 11 veranschaulicht den Dosendeckel 10 gemäß Fig. 10 in einer schematischen Seitenansicht. Fig. 12 entspricht einer Schnittansicht entlang der Linie B-B, wie in Fig. 10 gekennzeichnet.

In Fig. 12 ist zu erkennen, dass an dem Verschlusselement 18 in einer oberseitigen, dem Deckelspiegel 12 zugewandten Nut eine Dichtung 44 angeordnet ist. Die Dichtung 44 ist auch in Fig. 3 und 5 zu erkennen. Das Verschlusselement 18 ist mit dem Betätigungselement 16 derart verbunden, dass die Dichtung 44 unterseitig gegen den Deckelspiegel 12 gepresst wird und so die Ausgussöffnung 14 in der Schließstellung abdichtet. Zu diesem Zweck liegt das Betätigungselement 16 nur mit seinem gekrümmten Rand 46 oberseitig auf dem Deckelspiegel 12 auf und kann somit leicht vorgespannt werden. Beispielsweise kann das Betätigungselement im unverbundenen Zustand im Wesentlichen gerade ausgebildet sein und im mit dem Verschlusselement 18 verbundenen Zustand zu diesem hin durchgebogen sein. Alternativ kann das Verschlusselement, insbesondere dessen Unterseite, im unverbundenen Zustand bombiert sein, insbesondere konkav bombiert.

Im Bereich des Filmscharniers 24 weist das Verschlusselement 18 einen an dem Deckelspiegel 12 anliegenden Bereich 49 auf. Dieser kann das Betätigungselement 18, insbesondere das Filmscharnier 24, sowie den Deckelspiegel 12 in diesem Bereich beim Verschwenken des Griffabschnitts 20 abstützen. Dadurch kann eine Überlastung und ungewollte Verformung des Deckelspiegels 12 vermieden werden. Alternativ oder zusätzlich kann das Verschlusselement 18 entlang eines Mittenbereichs 47 am Deckelspiegel anliegen.

In einem weiteren Bereich weist das Verschlusselement 18 jeweilige Vertiefungen 48 auf. Diese Vertiefungen 48 können in der Offenstellung einen zusätzlichen Luftkanal zwischen dem Doseninneren und einer Umgebung bereitstellen. Über den Luftkanal kann Luft beim Ausgießen zurückströmen, um ein schnelles und gleichmäßiges Ausschütten zu ermöglichen. Ein Einlass des Luftkanals kann beispielsweise durch eine Öffnung zwischen dem Betätigungselement 16 und dem Verschlusselement 18 gebildet sein. In der Schließstellung ist diese Öffnung durch den Deckelspiegel 12 blockiert. Durch Verschieben dieses Einlasses in den Bereich der Ausgussöffnung 14 wird ein Spalt zwischen dem Betätigungselement 16 und dem Verschlusselement 18 freigegen, durch den Luft strömen kann.

Als Auslass des Luftkanals kann eine Öffnung freigegeben werden, indem das Verschlusselement 18 an der umlaufenden Sicke 13 des Deckelspiegels 12 ausgelenkt und so von der Unterseite des Deckelspiegels beabstandet wird. Dabei kann sich das Verschlusselement 18 und/oder der Deckelspiegel 12 elastisch verformen, um ebenfalls einen Spalt freizugeben. Das Verschlusselement kann gewissermaßen geringfügig in einem Endbereich nach unten rotieren. Alternativ kann in dem Deckelspiegel 12 eine Vertiefung 50 in Form einer Prägung in Richtung des Doseninneren nach unten in diesem Bereich angeordnet sein (nicht gezeigt), welche ebenfalls ein solches bereichsweises Auslenken des Verschlusselements 18 von dem Deckelspiegel 12 bewirken kann.

Alternativ können eine oder mehrere Ausbauchungen 50 in Richtung nach oben im Deckelspiegel 12 ausgebildet sein, womit ebenfalls wenigstens ein Durchgang für den Luftkanal in der Offenstellung freigegeben werden kann. Bei dieser Variante ist der Deckelspiegel 12 besonders widerstandsfähig gegen eine Verformung durch einen Doseninnendruck. In Fig. 8A sind beispielhaft vier Ausbauchungen 50 durch gestrichelte Linien illustriert. Diese können als Prägungen hergestellt werden.

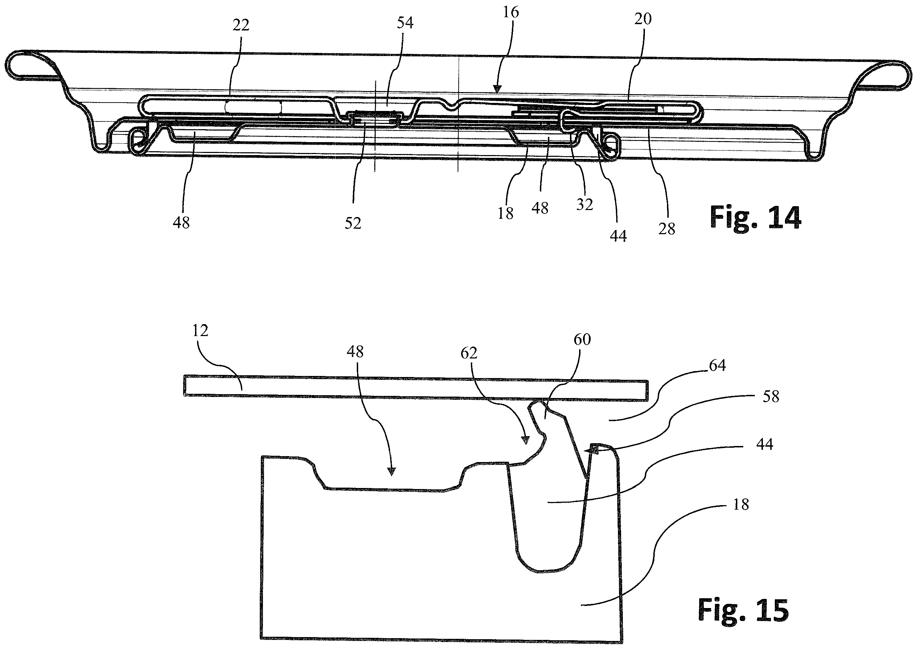

Fig. 13 zeigt die Schnittansicht des Dosendeckels 10 entlang Linie C-C, Fig. 14 die entlang Linie A-A. Dabei ist besonders gut die Verbindung des Betätigungselements 16 mit dem Verschlusselement 18 zu erkennen. Die Verbindung durchdringt nicht das Verschlusselement 18. Stattdessen weist das Verschlusselement 18 einen Nietnippel 52 auf, welcher von dem Verschlusselement 18 in Richtung Oberseite vorsteht und in dem Führungsschlitz 34 wenigstens teilweise angeordnet ist. Der Nietnippel 52 erstreckt sich durch eine Nietöffnung in dem Betätigungselement 16 bis zu dessen Oberseite und ist an diesem durch Vernietung geklemmt. Das Betätigungselement 16 hintergreift den Nietnippel 52 wenigstens teilweise.

Die Nietöffnung des Betätigungselements 16 ist in einer Richtung Unterseite geformten Vertiefung 54 des Betätigungselements 16 angeordnet. Die Vertiefung 54 kann auch als Vorsprung angesehen werden, welcher vorzugsweise in Richtung der Unterseite des Deckelspiegels 12 vorspringt. Die Vertiefung 54 erstreckt sich in den Führungsschlitz 34 und kann sich zur Führung der Verstellbewegung zwischen Schließstellung und Offenstellung an dem durch den Deckelspiegel 12 gebildeten Rand des Führungsschlitzes 34 abstützen. Durch die Vertiefung 54 kann die Nietverbindung eine geringe Bauhöhe aufweisen und damit auch der Dosendeckel 10. Insbesondere muss die Nietverbindung so nur eine geringfügig größere Höhe als eine übliche Vernietung von einem Deckelspiegel mit einer Metalllasche einer herkömmlichen Dose, welche nicht wiederverschließbar ist, aufweisen. Dadurch können übliche Maschinen und Prozesse auch bei dem Dosendeckel 10 verwendet werden. Insbesondere muss die Nietverbindung nicht eine Dicke des Materials des Deckelspiegels 12, des Betätigungselements 16 und des Verschlusselements 18 aufweisen, sondern nur des Betätigungselements 16 und des Verschlusselements 18.

Die Vertiefung 54 kann zudem auch eine Verdrehsicherung bereitstellen. Dafür weist die Vertiefung 54 zwei im Wesentlichen ebene Flächen 56 auf, welche u.a. in Fig. 10 zu erkennen sind. Die ebenen Flächen 56 erstrecken sich beispielsweise im Wesentlichen parallel zu dem Rand des Deckelspiegels 12, welcher den Führungsschlitz 34 begrenzt. Die ebenen Flächen 56 können sich an diesem Rand beim Verschieben des Betätigungselements 16 entlang des Führungsschlitzes 34 abstützen und so eine unerwünschte Rotation des Betätigungselements 16 verhindern.

In der Schnittdarstellung entlang Linie A-A gemäß Fig. 14 ist besonders gut die doppelte Materiallage des Betätigungselements 16 im Bereich des Griffabschnitts 20 zu erkennen. Zudem ist das Hintergreifen des Arretierelements 32 an dem Deckelspiegel 12 gut zu erkennen. In Fig. 14 ist auch dargestellt, dass bei dieser Ausführungsform der Griffabschnitt 20 vor seinem erstmaligen Öffnen leicht gegenüber dem Befestigungsabschnitt 22 hin zum Deckelspiegel 12 geneigt ist und durch die Arretierung dort eng anliegt.

Fig. 15 zeigt eine besonders vorteilhafte Querschnittsgestaltung der Dichtung 44 in einer Schnittansicht. Zu erkennen ist, dass die Dichtung 44 in einer Nut 58 des Verschlusselements 18 wenigstens teilweise aufgenommen ist. Die Dichtung 44 weist oberseitig eine Dichtlippe 60 auf, mit welcher diese den Deckelspiegel 12 unterseitig kontaktiert. Die Dichtlippe 60 ist vorzugsweise geneigt. Insbesondere kann sich die Dichtlippe 60 ausgehend von der Nut 58 nach radial innen erstrecken und/oder nach radial innen geneigt sein. Unterhalb und radial innen zu der Dichtlippe 60 weist diese eine Hinterschneidung 62 auf. Bei stärkerem Anpressen der Dichtlippe 60, beispielsweise aufgrund eines erhöhten Doseninnendrucks, kann die Dichtlippe in diesen Freiraum ausweichen. Damit können unterschiedliche Drücke ohne Beschädigung der Dichtung 44 kompensiert werden. Zudem kann eine Betätigungskraft aufgrund von Reibung zwischen der Dichtung 44 und dem Deckelspiegel 12 weniger stark mit dem Doseninnendruck variieren. Radial außenseitig ist vorzugsweise ein Freiraum 64 in der Nut 58 vorgesehen, welcher nicht von der Dichtung 44 belegt ist. Dies ermöglicht eine Ausgleichsbewegung der Dichtlippe 60 bei einer Bewegung in der Bildebene von Fig. 15 nach links, womit die Dichtlippe 60 vor Beschädigungen beim wiederholten Öffnen und Schließen des Dosendeckels 10 geschützt werden kann.

In Fig. 12 bis 14 ist als weitere Option gezeigt, dass die Dichtung 44 mittels eines umgefalzten Rands 45 in der Nut 58 geklemmt werden kann und/oder dass die Nut durch eine solche Falzung gebildet sein kann. Dadurch wird eine äußere Kante des Verschlusselements 18 durch die Dichtung 44 abgedichtet. Dieser Rand kann beispielsweise nicht mit Kunststoff beschichtet sein. So kann ein Eintritt von Metallpartikeln in den Doseninhalt und/oder eine Korrosion dieses Rands, insbesondere durch das Verhindern von Kontakt mit dem Doseninhalt, verhindert werden. Darüber hinaus wird die Dichtung 44 sicher und einfach gehalten.

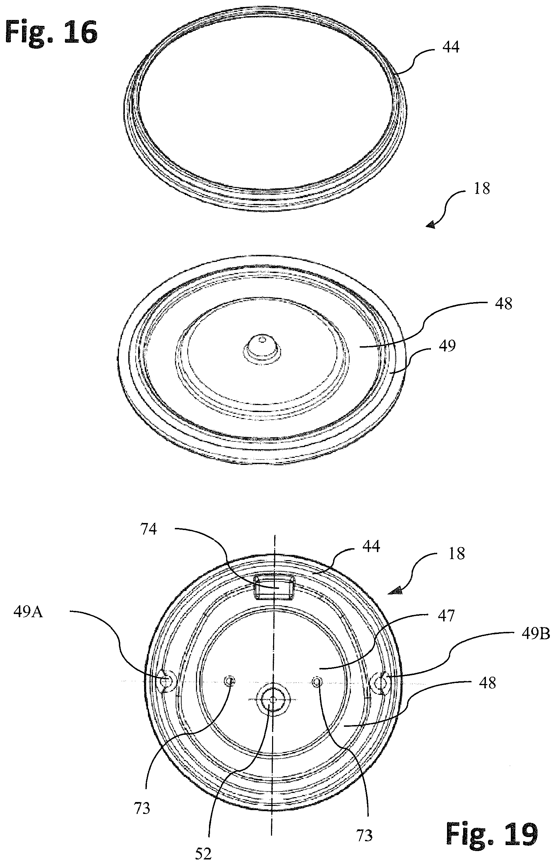

Fig. 16 verdeutlicht noch einmal die Form des Verschlusselements 18 in einer Explosionsdarstellung vor Verbindung mit der Dichtung 44. Zu sehen ist der Nietnippel 52, der von dem Mittenbereich 47 umgeben wird. Der Mittenbereich wird zumindest abschnittsweise oder, wie in Fig. 16 gezeigt, vollständig umlaufend von der Vertiefung 48 umgeben, die auch den Luftkanal bildet. Um die Vertiefung 48 herum ist zumindest abschnittsweise oder, wie in Fig. 16 gezeigt, vollständig umlaufend ein erhöhter Bereich 49 vorgesehen, der zur Stützung des Scharniers 24 am Deckelspiegel 12 anliegen kann. Das Verschlusselement 18 ist vorzugsweise rotationssymmetrisch, um die Herstellung zu erleichtern.

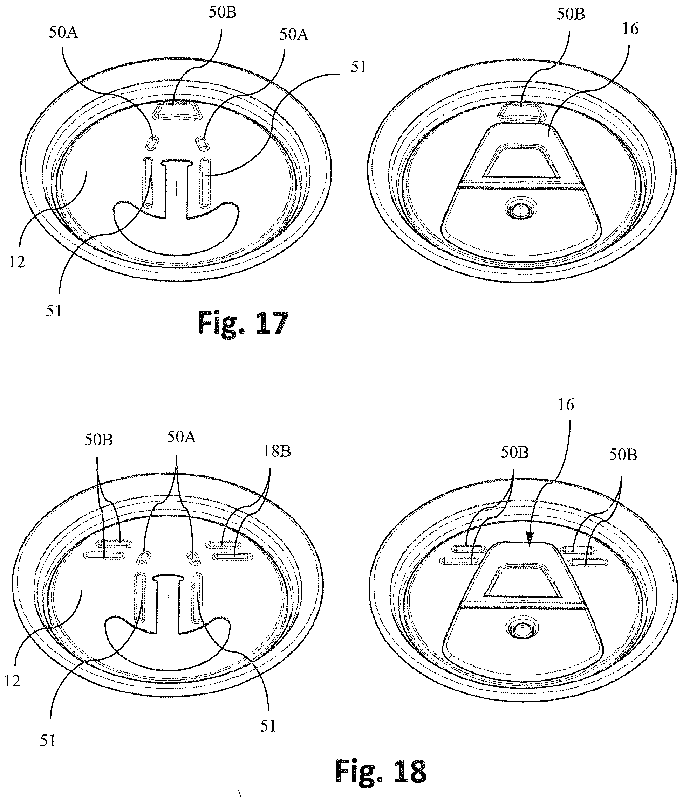

Fig. 17 und 18 zeigen weitere optionale Merkmale und Ausgestaltungen des Deckelspiegels 12, die in Kombination mit jedem der vorgehend beschriebenen Deckelspiegel 12 Verwendung finden können. Der Deckelspiegel 12 weist hierbei mindestens eine erste Vertiefung 50A oder mehrere Vertiefungen 50A auf, die während dem Öffnen des Verschlusselements 20 und/oder in dessen Offenstellung einen zweites offenes Ende des Luftkanals 48 bilden können, wie bereits vorgehend beschrieben.

Die mindestens eine erste Vertiefung 50A ist vorzugsweise so angeordnet, dass sie in der Schließstellung des Verschlusselements 18 innerhalb der Dichtung 49 (siehe Fig. 16 und 19) angeordnet ist.

Die mindestens eine erste Vertiefung 50A ist vorzugsweise so angeordnet, dass sie in der Schließstellung vom Verschlusselement 18 (in Fig. 17 und 18 nicht gezeigt) und/oder vom Betätigungselement 16 überdeckt wird, vorzugsweise vollständig.

Bei Verstellung des Verschlusselements 20 von der Schließstellung in die Offenstellung wird vorzugsweise eine Stellung, insbesondere eine Zwischenstellung, erreicht, in der die Dichtung 50 und/oder das Verschlusselement 20 die mindestens eine erste Vertiefung 50A teilweise überlappt. So kann ein Druckausgleich erreicht werden, insbesondere ein initialer Druckausgleich beim Öffnen des Verschlusselements 18. Die mindestens eine erste Vertiefung 50A kann so angeordnet sein, dass sie in der Offenposition vollständig vom Verschlusselement 18 überlappt wird und/oder vollständig innerhalb der Dichtung 44 angeordnet ist.

In Kombination mit oder unabhängig von der mindestens einen ersten Vertiefung 50A kann der Deckelspiegel 12 mindestens eine zweite Vertiefung 50B aufweisen. Diese ist vorzugsweise so angeordnet, dass sie in der Schließstellung vom Verschlusselement 18 nicht verdeckt wird und/oder in der Schließstellung nicht innerhalb der Dichtung 44 angeordnet ist, auch nicht teilweise. Die mindestens eine zweite Vertiefung 50B ist in der Schließstellung vorzugsweise nicht vom Betätigungselement 16 verdeckt. In der Offenstellung wird die mindestens eine zweite Vertiefung vorzugsweise teilweise (insbesondere nur teilweise) vom Verschlusselement 20 und/oder der Dichtung 50 und/oder dem Betätigungselement 16 überlappt. Die zweite Vertiefung 50B kann somit in der Schließstellung ein alternatives offenes zweites Ende für den Luftkanal 48 bereitstellen. Die Verwendung verschiedener Vertiefungen 50A, 50B ermöglicht es, den Luftfluss durch den Luftkanal 48 selektiv anzupassen. So kann die mindestens eine erste Vertiefung z.B. so dimensioniert sein, dass beim Öffnen ein Zischen entsteht. Die mindestens eine zweite Vertiefung 50B kann z.B. so dimensioniert sein, dass während dem Ausgießen ein Gluckern verhindert wird, insbesondere bei vollständiger Öffnung des Verschlusselements 18.

Die zweite Vertiefung 50B kann z.B. als eine oder mehrere Vertiefungen 50B ausgebildet sein, die in Verschieberichtung des Betätigungselement 16 hinter dem Bedienelement 30 (siehe Fig. 17) und/oder neben dem Betätigungselement 16 angeordnet ist (siehe Fig. 18).

Die mindestens eine erste Vertiefung 50A und/oder die mindestens eine zweite Vertiefung 50B können nach oben oder nach unten vorstehen. Die mindestens eine erste Vertiefung 50A und/oder die mindestens eine zweite Vertiefung 50B kann insbesondere als Prägung im Deckelspiegel 12 ausgebildet sein.

In Kombination mit oder unabhängig von der mindestens einen ersten Vertiefung 50A und/oder der mindestens einen zweiten Vertiefung 50B kann der Deckelspiegel 12 ferner eine oder mehrere (insbesondere zwei) dritte Vertiefungen 51 aufweisen. Diese können mit einem oder mehreren entsprechenden Vorsprüngen 73 auf der Oberseite des Verschlusselements 18 zusammenwirken (siehe Fig. 21), um eine Längsführung und/oder Verdrehsicherung für das Verschlusselement 18 bereitzustellen. Die Vertiefung 51 steht insofern vorzugsweise nach oben vor. Sie kann als eine Prägung im Deckelspiegel 12 ausgebildet sein.

Fig. 19 zeigt eine weitere Ausgestaltung des Verschlusselements 18 zur Verdeutlichung einiger weiterer optionaler Merkmale. Das Verschlusselement weist hier insbesondere einen ersten anliegenden Bereich 49A und einen zweiten anliegenden Bereich 49B auf, die beide vom Verschlusselement 18 nach oben vorspringen. Diese dienen der Abstützung des Scharniers. Unabhängig von den anliegenden Bereichen 49A, 49B kann das Verschlusselement ferner eine Vertiefung zur Aufnahme des Arretierelements aufweisen, die bei der gezeigten Ausgestaltung als eine Aussparung 74 zusätzlich zum Luftkanal 48 vorgesehen ist. Wie zudem erkennbar ist, muss das Verschlusselement 18 nicht rotationssymmetrisch sein.

Obwohl vorstehend ein Dosendeckel und eine Dose beschrieben werden, kann der offenbarte Verschluss auch an anderen Behältern für Flüssigkeiten angebracht werden. Solche Flüssigkeitsbehälter können z.B. aus Karton, Plastik und/oder Metall hergestellt sein. Dies gilt insbesondere für Behälter, die zumindest im Bereich einer Ausgussöffnung aus einem Material hergestellt sind, das eine ausreichende Steifigkeit aufweist. Der vorliegend genannte Deckelspiegel kann bei einem Flüssigkeitsbehälter z.B. durch eine Wand des Behälters ersetzt sein und/oder durch eine solche Wand gebildet werden.

Die nachfolgenden Aspekte sind bevorzugte Ausführungsformen der vorliegenden Erfindung.
1. Dosendeckel (10) für eine Dose, vorzugsweise ausgebildet als Getränkedose und/oder als Aufbewahrungsbehälter für Schüttgut, mit:
   wenigstens einem Deckelspiegel (12), welcher dazu ausgebildet ist, eine Oberseite der Dose zu begrenzen, vorzugsweise durch Bördeln eines äußeren umlaufenden Rands des Deckelspiegels (12) mit einer seitlichen Wand der Dose, wobei der Deckelspiegel (12) wenigstens eine Ausgussöffnung (14) aufweist, durch welche ein in der Dose befindlicher Stoff ausgeschüttet werden kann;
   einem Betätigungselement (16), welches an einer Oberseite des Deckelspiegels (12), welche einem Innenraum der Dose bei daran angebrachtem Dosendeckel (10) abgewandt ist, angeordnet ist; und
   einem Verschlusselement (18), welches an einer Unterseite des Deckelspiegels (12), welche einem Innenraum der Dose bei daran angebrachtem Dosendeckel (10) zugewandt ist, angeordnet ist, wobei das Verschlusselement (18) zwischen einer Schließstellung, in welcher das Verschlusselement (18) die Ausgussöffnung (14) fluiddicht und/oder gasdicht verschließt, und einer Offenstellung, in welcher die Ausgussöffnung (14) wenigstens teilweise freigegeben ist, im Wesentlichen translatorisch entlang des Deckelspiegels (12) geführt mittels des Betätigungselements (16) verschiebbar ist;
   wobei das Verschlusselement (18) und das Betätigungselement (18) aus einem metallischen Werkstoff gebildet sind, vorzugsweise aus einem Aluminiumwerkstoff oder Weißblech; und
   wobei das Verschlusselement (18) und das Betätigungselement (16) mittels einer Verbindung, insbesondere einer Nietverbindung und/oder einer Schweißverbindung, aneinander befestigt sind, wobei sich die Verbindung bei Verschiebung des Verschlusselements (18) aus der Schließstellung in die Offenstellung entlang eines Führungsschlitzes (34) in dem Deckelspiegel (12) bewegt.
2. Dosendeckel (10) nach Aspekt 1,
   wobei die als Nietverbindung ausgebildete Verbindung durch einen in dem Verschlusselement (18) oder dem Betätigungselement (16) geformten Nietnippel (52) gebildet ist, welcher in einer korrespondierenden Nietöffnung des anderen der beiden Elemente (16, 18) angeordnet ist.
3. Dosendeckel (10) nach Aspekt 2,
   wobei sich die Nietöffnung durch einen Vorsprung (54) erstreckt, vorzugsweise durch einen in Richtung der Unterseite des Deckelspiegels (12) vorspringenden Vorsprung (54) des Betätigungselements (16);
   wobei sich der Vorsprung (54) vorzugsweise in der Offenstellung und/oder in der Schließstellung zumindest teilweise durch den Führungsschlitz (34) erstreckt.
4. Dosendeckel (10) nach einem der vorhergehenden Aspekte,
   wobei an der Verbindung in einem Bereich, der sich durch den Führungsschlitz (34) erstreckt, mindestens eine ebene Fläche (56) ausgebildet ist;
   wobei die mindestens eine ebene Fläche (56) einem den Führungsschlitz (34) begrenzenden Rand des Deckelspiegels (12) zugewandt ist.
5. Dosendeckel (10) nach einem der vorhergehenden Aspekte,
   wobei der Dosendeckel (10) wenigstens eine Dichtung (44) aufweist, welche wenigstens in der Schließstellung des Verschlusselements (18) zwischen dem Verschlusselement (18) und dem Deckelspiegel (12) angeordnet ist;
   wobei die Dichtung (44) vorzugsweise zumindest teilweise in einer Nut (58) aufgenommen ist, die auf einer Oberseite des Verschlusselements (18) ausgebildet ist; und/oder
   wobei die Dichtung (44) vorzugsweise mittels eines Außenrands des Verschlusselements (18) an dem Verschlusselement (18) fixiert ist, wobei der Außenrand in die Dichtung (44) und/oder über einen Abschnitt der Dichtung (44) gebogen ist.
6. Dosendeckel (10) nach Aspekt 5,
   wobei die Dichtung (44) eine Hinterschneidung (62) aufweist;
      und/oder
   ein Querschnitt des in der Nut (58) aufgenommenen Teilbereichs der Dichtung (44) kleiner ist als ein Querschnitt der Nut (58).
7. Dosendeckel (10) nach einem der vorhergehenden Aspekte,
   wobei der Deckelspiegel (12) und/oder das Verschlusselement (18) eine Kerbe (40) oder Prägung in einem Teilbereich aufweist, welcher einem Teilbereich der Ausgussöffnung (14), welcher bei dem Verstellen des Verschlusselements (18) von der Schließstellung in die Offenstellung zuerst freigegeben wird, benachbart angeordnet ist oder diesen Teilbereich begrenzt.
8. Dosendeckel (10) nach einem der vorhergehenden Aspekte,
   wobei der Deckelspiegel (12) ferner eine Druckausgleichöffnung (42) aufweist, wobei die Querschnittfläche der Druckausgleichöffnung (42) kleiner als die Querschnittfläche der Ausgussöffnung (14) ist;
   wobei die Druckausgleichöffnung (42) in der Schließstellung von dem Verschlusselement (18) fluiddicht und/oder gasdicht verschlossen ist und in der Offenstellung wenigstens teilweise freigegeben ist;
   wobei die Druckausgleichöffnung (42) derart angeordnet ist, dass diese beim Verstellen des Verschlusselements (18) von der Schließstellung in die Offenstellung vor der Ausgussöffnung (14) freigegeben wird.
9. Dosendeckel (10) nach einem der vorhergehenden Aspekte,
   wobei in der Offenstellung zwischen dem Verschlusselement (18) und dem Deckelspiegel (12) ein Luftkanal (48) gebildet ist, dessen erstes Ende an der Oberseite des Deckelspiegels (12) und/oder an einem dem äußeren Deckelspiegelrand abgewandten Endbereich der Ausgussöffnung (14) mündet und dessen zweites Ende an einer Unterseite des Deckelspiegels (12) an einem der Ausgussöffnung (14) abgewandten Endbereich des Verschlusselements (18) mündet.
10. Dosendeckel (10) nach einem der vorhergehenden Aspekte,
   wobei das Betätigungselement (16) wenigstens einen Befestigungsabschnitt (22), in welchem die Verbindung mit dem Verschlusselement (18) ausgebildet ist, und einen damit verbundenen Griffabschnitt (20), welcher zum Greifen Zwecks der Verstellung zwischen der Offenstellung und der Schließstellung ausgebildet ist, aufweist;
   wobei der Griffabschnitt (20) vorzugsweise zwischen einer Verstaustellung, in welcher der Griffabschnitt (20) im Wesentlichen parallel zu dem Deckelspiegel (12) und/oder dem Befestigungsabschnitt (22) angeordnet ist, und einer Betätigungsstellung, in welcher der Griffabschnitt (20) für das Verstellen zwischen der Offenstellung und der Schließstellung greifbar ist, schwenkbar ist; und
   wobei der Befestigungsabschnitt (22) und der Griffabschnitt (20) mittels eines Gelenks verbunden sind, insbesondere mittels eines Filmscharniers (24), dessen Gelenkachse sich quer zu einer Längsachse des Führungsschlitzes (34) erstreckt, wobei der Griffabschnitt (20) dazu ausgebildet ist, zum Verstellen zwischen der Verstaustellung und der Betätigungsstellung relativ zu dem Befestigungsabschnitt (22) um die Gelenkachse geschwenkt zu werden.
11. Dosendeckel (10) nach Aspekt 10,
   wobei der Griffabschnitt (20) eine Ausgangsstellung hat, welche vorzugsweise der Verstaustellung entspricht;
   wobei das Betätigungselement (16) so ausgebildet ist, dass sich der Griffabschnitt (20) nach einem erstmaligen Verstellen aus der Ausgangsstellung nicht mehr bleibend in die Ausgangsstellung rückverstellen lässt;
      und/oder
   wobei das Betätigungselement (16) so ausgebildet ist, dass es sich bei einem erstmaligen Verstellen des Griffabschnitts (20) aus der Ausgangsstellung plastisch verformt, insbesondere dauerhaft und/oder bleibend optisch erkennbar.
12. Dosendeckel (10) nach einem der vorhergehenden Aspekte,
   wobei das Betätigungselement (16) einen Arretierabschnitt (28) aufweist, mittels welchem das Betätigungselement (16) vor einem erstmaligen Verstellen aus der Schließstellung in die Offenstellung an dem Deckelspiegel (12) in der Schließstellung arretiert ist;
   wobei der Arretierabschnitt (28) vorzugsweise ein von der Unterseite des Betätigungselements (16) nach unten vorstehendes Arretierelement (32) aufweist;
   wobei das Arretierelement (32) vorzugsweise als Haken ausgebildet ist.
13. Dose, vorzugsweise ausgebildet als Getränkedose und/oder als Aufbewahrungsbehälter für Schüttgut, aufweisend wenigstens einen Dosendeckel (10) nach einem der vorgehenden Aspekte.
14. Verfahren zum Herstellen eines Dosendeckels (10) für eine Dose, vorzugsweise ausgebildet als Getränkedose und/oder als Aufbewahrungsbehälter für Schüttgut, vorzugsweise eines Dosendeckels (10) nach einem der Aspekte 1 bis 12, gekennzeichnet durch folgende Schritte:
   - Bereitstellen eines Deckelspiegels (12), welcher dazu ausgebildet ist, eine Oberseite der Dose zu begrenzen, insbesondere durch Bördeln eines äußeren umlaufenden Rands des Deckelspiegels (12) mit einer seitlichen Wand der Dose, wobei der Deckelspiegel (12) wenigstens eine Ausgussöffnung (14), durch welche ein in der Dose befindlicher Stoff ausgeschüttet werden kann, und einen Führungsschlitz (34) aufweist;
   - Bereitstellen eines Betätigungselements (16) und eines Verschlusselements (18) gebildet aus einem metallischen Werkstoff, vorzugsweise aus einem Aluminiumwerkstoff oder Weißblech;
   - Anordnen des Verschlusselements (18) an einer Unterseite des Deckelspiegels (12), welche einem Innenraum der Dose bei daran angebrachtem Dosendeckel (10) zugewandt ist;
   - Anordnen des Betätigungselements (16) an einer Oberseite des Deckelspiegels (12), welche einem Innenraum der Dose bei daran angebrachtem Dosendeckel (10) abgewandt ist;
   - Befestigen des Verschlusselements (18) und des Betätigungselements (16) mittels einer Verbindung, insbesondere einer Nietverbindung oder Schweißverbindung, miteinander, wobei die Verbindung entlang des Führungsschlitzes (34) bewegbar ist;
   wobei das Verschlusselement (18) mittels des Betätigungselements (16) zwischen einer Schließstellung, in welcher das Verschlusselement (18) die Ausgussöffnung (14) fluiddicht und/oder gasdicht verschließt, und einer Offenstellung, in welcher das Verschlusselement (18) die Ausgussöffnung (14) wenigstens teilweise freigibt, im Wesentlichen translatorisch entlang des Deckelspiegels (12) geführt verschiebbar ist.
15. Verfahren nach Aspekt 14, wobei das Betätigungselement (16) einen Arretierabschnitt (28) aufweist, mittels welchem das Betätigungselement (16) vor einem erstmaligen Verstellen aus einer Schließstellung in die Offenstellung in der Schließstellung an dem Deckelspiegel (12) arretiert ist.
16. Verfahren nach Aspekt 15, ferner die folgenden Schritte aufweisend:
   - Formen eines unterseitig vorstehenden Bereichs im Arretierabschnitt (28), insbesondere mittels Stanzen und Biegen;
   - Anordnen des Betätigungselements (16) oberseitig an dem Deckelspiegel (12) derart, dass der vorstehende Bereich durch den Führungsschlitz (34) ragt, wobei das Betätigungselements (16) vorzugsweise in der Schließstellung angeordnet ist; und
   - anschließendes Biegen eines Teilbereichs des vorstehenden Bereichs, insbesondere mittels eines Schiebers, um vorzugsweise einen Haken (32) zu formen.

### BEZUGSZEICHENLISTE

- 10: Dosendeckel
- 12: Deckelspiegel
- 13: Sicke
- 14: Ausgussöffnung
- 16: Betätigungselement
- 18: Verschlusselement
- 20: Griffabschnitt
- 22: Befestigungsabschnitt
- 24: Filmscharnier
- 26: Vertiefung
- 28: Arretierabschnitt
- 29: Teilbereich
- 30: dünner Bereich
- 32: Arretierelement
- 34: Führungsschlitz
- 36: Endbereich
- 38: Entlastungskerbe
- 40: Kerbe
- 42: Durchgangsöffnung
- 44: Dichtung
- 45: Umgefalzter Rand
- 46: Rand
- 47: Mittenbereich
- 48: Vertiefung
- 49: anliegender Bereich
- 49A: erster anliegender Bereich
- 49B: zweiter anliegender Bereich
- 50: Vertiefung
- 50A: erste Vertiefung
- 50B: zweite Vertiefung
- 51: dritte Vertiefung
- 52: Nietnippel
- 54: Vertiefung
- 56: ebene Fläche
- 58: Nut
- 60: Dichtlippe
- 62: Hinterschneidung
- 64: Freiraum
- 73: Vorsprung
- 74: Aussparung

## Patentansprüche

1. Dosendeckel (10) für eine Dose, mit:
wenigstens einem Deckelspiegel (12), welcher dazu ausgebildet ist, eine Oberseite der Dose zu begrenzen, wobei der Deckelspiegel (12) wenigstens eine Ausgussöffnung (14) aufweist, durch welche ein in der Dose befindlicher Stoff ausgeschüttet werden kann;
einem Betätigungselement (16), welches an einer Oberseite des Deckelspiegels (12), welche einem Innenraum der Dose bei daran angebrachtem Dosendeckel (10) abgewandt ist, angeordnet ist; und
einem Verschlusselement (18), welches an einer Unterseite des Deckelspiegels (12), welche einem Innenraum der Dose bei daran angebrachtem Dosendeckel (10) zugewandt ist, angeordnet ist, wobei das Verschlusselement (18) zwischen einer Schließstellung, in welcher das Verschlusselement (18) die Ausgussöffnung (14) fluiddicht und/oder gasdicht verschließt, und einer Offenstellung, in welcher die Ausgussöffnung (14) wenigstens teilweise freigegeben ist, im Wesentlichen translatorisch entlang des Deckelspiegels (12) geführt mittels des Betätigungselements (16) verschiebbar ist;
wobei das Verschlusselement (18) und das Betätigungselement (16) mittels einer Verbindung aneinander befestigt sind;
wobei in der Offenstellung zwischen dem Verschlusselement (18) und dem Deckelspiegel (12) ein Luftkanal (48) gebildet ist, wobei ein erstes Ende des Luftkanals (48) in der Offenstellung durch eine Lücke zwischen dem Verschlusselement (18) und dem Betätigungselement (16) gebildet ist, wobei die Lücke durch ein Auslenken des Verschlusselements (18) an einem dem Verschlusselement (18) zugewandten Vorsprung des Deckelspiegels (12) in der Offenstellung gebildet wird.

2. Dosendeckel (10) nach Anspruch 1,
wobei die als Nietverbindung ausgebildete Verbindung durch einen in dem Verschlusselement (18) oder dem Betätigungselement (16) geformten Nietnippel (52) gebildet ist, welcher in einer korrespondierenden Nietöffnung des anderen der beiden Elemente (16, 18) angeordnet ist.

3. Dosendeckel (10) nach Anspruch 2,
wobei sich die Nietöffnung durch einen Vorsprung (54) erstreckt, vorzugsweise durch einen in Richtung der Unterseite des Deckelspiegels (12) vorspringenden Vorsprung (54) des Betätigungselements (16);
wobei sich der Vorsprung (54) vorzugsweise in der Offenstellung und/oder in der Schließstellung zumindest teilweise durch einen Führungsschlitz (34) in dem Deckelspiegel (12) erstreckt.

4. Dosendeckel (10) nach einem der vorhergehenden Ansprüche,
wobei an der Verbindung in einem Bereich, der sich durch einen Führungsschlitz (34) in dem Deckelspiegel (12) erstreckt, mindestens eine ebene Fläche (56) ausgebildet ist;
wobei die mindestens eine ebene Fläche (56) einem den Führungsschlitz (34) begrenzenden Rand des Deckelspiegels (12) zugewandt ist.

5. Dosendeckel (10) nach einem der vorhergehenden Ansprüche,
wobei der Dosendeckel (10) wenigstens eine Dichtung (44) aufweist, welche wenigstens in der Schließstellung des Verschlusselements (18) zwischen dem Verschlusselement (18) und dem Deckelspiegel (12) angeordnet ist;
wobei die Dichtung (44) vorzugsweise zumindest teilweise in einer Nut (58) aufgenommen ist, die auf einer Oberseite des Verschlusselements (18) ausgebildet ist; und/oder
wobei die Dichtung (44) vorzugsweise mittels eines Außenrands des Verschlusselements (18) an dem Verschlusselement (18) fixiert ist, wobei der Außenrand in die Dichtung (44) und/oder über einen Abschnitt der Dichtung (44) gebogen ist,
vorzugsweise wobei:
die Dichtung (44) eine Hinterschneidung (62) aufweist;
und/oder
ein Querschnitt des in der Nut (58) aufgenommenen Teilbereichs der Dichtung (44) kleiner ist als ein Querschnitt der Nut (58).

6. Dosendeckel (10) nach einem der vorhergehenden Ansprüche,
wobei der Deckelspiegel (12) und/oder das Verschlusselement (18) eine Kerbe (40) oder Prägung in einem Teilbereich aufweist, welcher einem Teilbereich der Ausgussöffnung (14), welcher bei dem Verstellen des Verschlusselements (18) von der Schließstellung in die Offenstellung zuerst freigegeben wird, benachbart angeordnet ist oder diesen Teilbereich begrenzt.

7. Dosendeckel (10) nach einem der vorhergehenden Ansprüche,
wobei der Deckelspiegel (12) ferner eine Druckausgleichöffnung (42) aufweist, wobei die Querschnittfläche der Druckausgleichöffnung (42) kleiner als die Querschnittfläche der Ausgussöffnung (14) ist;
wobei die Druckausgleichöffnung (42) in der Schließstellung von dem Verschlusselement (18) fluiddicht und/oder gasdicht verschlossen ist und in der Offenstellung wenigstens teilweise freigegeben ist;
wobei die Druckausgleichöffnung (42) derart angeordnet ist, dass diese beim Verstellen des Verschlusselements (18) von der Schließstellung in die Offenstellung vor der Ausgussöffnung (14) freigegeben wird.

8. Dosendeckel (10) nach einem der vorhergehenden Ansprüche,
wobei das erste Ende des Luftkanals an der Oberseite des Deckelspiegels (12) und/oder an einem dem äußeren Deckelspiegelrand abgewandten Endbereich der Ausgussöffnung (14) mündet und ein zweites Ende des Luftkanals an einer Unterseite des Deckelspiegels (12) an einem der Ausgussöffnung (14) abgewandten Endbereich des Verschlusselements (18) mündet.

9. Dosendeckel (10) nach einem der vorhergehenden Ansprüche,
wobei das Betätigungselement (16) wenigstens einen Befestigungsabschnitt (22), in welchem die Verbindung mit dem Verschlusselement (18) ausgebildet ist, und einen damit verbundenen Griffabschnitt (20), welcher zum Greifen Zwecks der Verstellung zwischen der Offenstellung und der Schließstellung ausgebildet ist, aufweist;
wobei der Griffabschnitt (20) vorzugsweise zwischen einer Verstaustellung, in welcher der Griffabschnitt (20) im Wesentlichen parallel zu dem Deckelspiegel (12) und/oder dem Befestigungsabschnitt (22) angeordnet ist, und einer Betätigungsstellung, in welcher der Griffabschnitt (20) für das Verstellen zwischen der Offenstellung und der Schließstellung greifbar ist, schwenkbar ist; und
wobei der Befestigungsabschnitt (22) und der Griffabschnitt (20) mittels eines Gelenks verbunden sind, insbesondere mittels eines Filmscharniers (24), dessen Gelenkachse sich quer zu einer Längsachse eines Führungsschlitzes (34) in dem Deckelspiegel (12) erstreckt, wobei der Griffabschnitt (20) dazu ausgebildet ist, zum Verstellen zwischen der Verstaustellung und der Betätigungsstellung relativ zu dem Befestigungsabschnitt (22) um die Gelenkachse geschwenkt zu werden.

10. Dosendeckel (10) nach Anspruch 9,
wobei der Griffabschnitt (20) eine Ausgangsstellung hat, welche vorzugsweise der Verstaustellung entspricht;
wobei das Betätigungselement (16) so ausgebildet ist, dass sich der Griffabschnitt (20) nach einem erstmaligen Verstellen aus der Ausgangsstellung nicht mehr bleibend in die Ausgangsstellung rückverstellen lässt;
und/oder
wobei das Betätigungselement (16) so ausgebildet ist, dass es sich bei einem erstmaligen Verstellen des Griffabschnitts (20) aus der Ausgangsstellung plastisch verformt, insbesondere dauerhaft und/oder bleibend optisch erkennbar.

11. Dosendeckel (10) nach einem der vorhergehenden Ansprüche,
wobei das Betätigungselement (16) einen Arretierabschnitt (28) aufweist, mittels welchem das Betätigungselement (16) vor einem erstmaligen Verstellen aus der Schließstellung in die Offenstellung an dem Deckelspiegel (12) in der Schließstellung arretiert ist;
wobei der Arretierabschnitt (28) vorzugsweise ein von der Unterseite des Betätigungselements (16) nach unten vorstehendes Arretierelement (32) aufweist;
wobei das Arretierelement (32) vorzugsweise als Haken ausgebildet ist.

12. Dose, vorzugsweise ausgebildet als Getränkedose und/oder als Aufbewahrungsbehälter für Schüttgut, aufweisend wenigstens einen Dosendeckel (10) nach einem der vorgehenden Ansprüche.

13. Verfahren zum Herstellen eines Dosendeckels (10) nach einem der Ansprüche 1 bis 11 für eine Dose, **gekennzeichnet durch** folgende Schritte:
- Bereitstellen eines Deckelspiegels (12), welcher dazu ausgebildet ist, eine Oberseite der Dose zu begrenzen, wobei der Deckelspiegel (12) wenigstens eine Ausgussöffnung (14), durch welche ein in der Dose befindlicher Stoff ausgeschüttet werden kann;
- Bereitstellen eines Betätigungselements (16) und eines Verschlusselements (18);
- Anordnen des Verschlusselements (18) an einer Unterseite des Deckelspiegels (12), welche einem Innenraum der Dose bei daran angebrachtem Dosendeckel (10) zugewandt ist;
- Anordnen des Betätigungselements (16) an einer Oberseite des Deckelspiegels (12), welche einem Innenraum der Dose bei daran angebrachtem Dosendeckel (10) abgewandt ist;
- Befestigen des Verschlusselements (18) und des Betätigungselements (16) mittels einer Verbindung;
wobei das Verschlusselement (18) mittels des Betätigungselements (16) zwischen einer Schließstellung, in welcher das Verschlusselement (18) die Ausgussöffnung (14) fluiddicht und/oder gasdicht verschließt, und einer Offenstellung, in welcher das Verschlusselement (18) die Ausgussöffnung (14) wenigstens teilweise freigibt, im Wesentlichen translatorisch entlang des Deckelspiegels (12) geführt verschiebbar ist;
wobei in der Offenstellung zwischen dem Verschlusselement (18) und dem Deckelspiegel (12) ein Luftkanal (48) gebildet ist, wobei ein erstes Ende des Luftkanals (48) in der Offenstellung durch eine Lücke zwischen dem Verschlusselement (18) und dem Betätigungselement (16) gebildet ist, wobei die Lücke durch ein Auslenken des Verschlusselements (18) an einem dem Verschlusselement (18) zugewandten Vorsprung des Deckelspiegels (12) in der Offenstellung gebildet wird.

14. Verfahren nach Anspruch 13, wobei das Betätigungselement (16) einen Arretierabschnitt (28) aufweist, mittels welchem das Betätigungselement (16) vor einem erstmaligen Verstellen aus einer Schließstellung in die Offenstellung in der Schließstellung an dem Deckelspiegel (12) arretiert ist.

15. Verfahren nach Anspruch 14, ferner die folgenden Schritte aufweisend:
- Formen eines unterseitig vorstehenden Bereichs im Arretierabschnitt (28), insbesondere mittels Stanzen und Biegen;
- Anordnen des Betätigungselements (16) oberseitig an dem Deckelspiegel (12) derart, dass der vorstehende Bereich durch einen Führungsschlitz (34) in dem Deckelspiegel (12) ragt, wobei das Betätigungselements (16) vorzugsweise in der Schließstellung angeordnet ist; und
- anschließendes Biegen eines Teilbereichs des vorstehenden Bereichs, insbesondere mittels eines Schiebers, um vorzugsweise einen Haken (32) zu formen.
